# EUROPÄISCHE PATENTSCHRIFT

(11) **EP 3 921 629 B1**
(45) Veröffentlichungstag und Bekanntmachung des Hinweises auf die Patenterteilung: **12.10.2022**
(21) Anmeldenummer: 20721403.2
(22) Anmeldetag: 09.04.2020
(51) Int. Cl.: G01F 1/7086, G01F 1/712, G01N 21/3581, G01F 1/74, G01N 21/85

(54) **THZ-MESSVERFAHREN UND THZ-MESSVORRICHTUNG ZUM ERFASSEN EINES MATERIESTROMS**
THZ MEASURING METHOD AND THZ MEASURING DEVICE FOR DETECTING A MATERIAL FLOW
PROCÉDÉ DE MESURE À THZ ET DISPOSITIF DE MESURE À THZ POUR DÉTECTER UN FLUX DE MATÉRIAUX

(30) Priorität: 09.04.2019 DE 102019109340
(43) Veröffentlichungstag der Anmeldung: 15.12.2021
(73) Patentinhaber: CiTEX Holding GmbH, 49324 Melle (DE)
(72) Erfinder: THIEL, Marius, 49090 Osnabrück (DE)
(74) Vertreter: Bremer, Ulrich
(86) Internationale Anmeldenummer: PCT/DE2020/100291
(87) Internationale Veröffentlichungsnummer: WO 2020/207539

(56) Entgegenhaltungen:
- WO-A1-2009/009785
- DE-A1-102011 112 697
- DE-A1-102016 103 298
- US-A1- 2009 198 466

## Beschreibung

Die Erfindung betrifft ein THz-Messverfahren und eine THz- Messvorrichtung zum Erfassen eines Materiestroms.

THz-Strahlung kann insbesondere im Frequenzbereich zwischen 5 GHz und 50 THz, insbesondere zwischen 10 GHz, 30 GHz oder 300 GHz und 3 THz oder 10 THz erzeugt werden. Die THz-Strahlung kann optisch erzeugt werden, z. B. mittels eines Kurzzeitlasers, der mit Kurzzeit-Impulsen ein Foto-Schaltelement leitfähig schaltet, zum Durchschalten einer anliegenden Spannung auf eine Dipol-Anordnung. Weiterhin sind vollelektronische THz-Sensoren bekannt, die mittels eines elektronisch angesteuerten Dipols einen THz-Sendestrahl erzeugen und einen reflektierten THz-Reflektionsstrahl aufnehmen, insbesondere um den THz-Sendestrahl und THz-Reflektionsstrahl zur Detektion von Laufzeiten oder Frequenzverschiebungen (FMCW) zu mischen. Hierbei kann eine direkte Messung einer Laufzeit der THz-Strahlung, sowie eine Frequenzmodulation zur Messung in einem Frequenzraum vorgesehen sein, mit kontinuierlicher oder gepulster Strahlung.

Materieströme enthalten Festkörper-Partikel bzw. Materie-Partikel in einem umgebenden Gas, z. B. Luft, wobei der Materiestrom in einer Fördereinrichtung, z.B. einem Rohr, Rinne oder Schlauch, transportiert wird. Die Festkörper-Partikel können z.B. ein Granulat, ein Pulver, oder auch Flocken bzw. Häckselware oder Fasern sein.

In verschiedenen Produktionsprozessen ist die genaue Erfassung eines Materiedurchsatzes erforderlich. Hierbei sind insbesondere gravimetrische Messverfahren bekannt, bei denen die zugeführte z. B. pulverförmige oder körnige Materie über eine Waage transportiert wird und somit eine Zuführrate als dynamische Materiemenge durch ein Wägeverfahren ermittelt wird.

Derartige Wägeverfahren erlauben grundsätzlich eine begrenzte Messgenauigkeit und zeigen hohe Schwankungen, insbesondere auch aufgrund der mechanischen Belastung und mechanischen Schwingungen durch den auftreffenden Materiestrom. Zudem sind z.B. bei sog. gravimetrischen "loss in weight"-Verfahren im Zeitraum von Nachfüllvorgängen des Wägebehälters keine Messungen möglich.

Zur Messung von Durchsatzraten von Flüssigkeiten und Gasen sind Ultraschall-Erfassungen bekannt, z. B. mittels Dopplereffekt. Bei der Erfassung von Materieströmen aus Festkörper-Partikeln kann durch Doppler- Messungen allenfalls die Geschwindigkeit einzelner Körner, jedoch nicht die Anzahl und Verteilung der Körner sowie die Durchsatzrate genau erfasst werden.

US 2017/0322064A1 beschreibt ein Verfahren zum Bestimmen eines Anteils einer oder mehrerer Phasen in einem Multi-Phasen-Fluid, insbesondere Öl und Wasser, wobei von einer Mess-Einrichtung eine breitbandige elektromagnetische Strahlung in das Fluid ausgesandt wird, wobei eine Resonanz erzeugt werden soll. Hierbei wird die Strahlung von einer Antenne durch das Fluid ausgesandt und einer weiteren Antenne in Transmission aufgenommen. In dem Mess-Signal können charakteristische Resonanzen der einzelnen Phasen bei spezifischen Frequenzen detektiert werden.

DE 10 2016 103 298 A1 zeigt eine Terahertz-Messvorrichtung zum Ermitteln einer Schichtdicke einer Schicht eines Prüfobjektes, bei der hinter dem Prüfobjekt ein Spiegel vorgesehen ist, der durch das Prüfobjekt gelangte THz-Strahlung zurück reflektiert. Die WO2007/143474A1 beschreibt ein Verfahren und ein System zur Überwachung eines durch eine Leitung fließenden Fluids.

Die WO 2009/009785A1 beschreibt ein System und ein Verfahren zum Bestimmen eines Peak-Zeitwertes in Zeitdaten für eine Zeit-Domain-THz-Wellenform, wobei die Zeit-Domain-THz-Wellenform aufgenommen wird und ein Mittelpunkt der Kanten der Wellenform ermittelt wird, und nachfolgend ein linearer Fit der Wellenform für einen Punkt nahe des Mittelpunkts durchgeführt wird. Hieraus kann ein Wert errechnet werden.

Die US2009/0198466A1 beschreibt eine Informations-aufnehmende Vorrichtung zum Aufnehmen von Informationen eines Objektes mittels THz-Domain-Spektroskopie, wobei eine Vorrichtung mit einer Lichtquelle zum Erzeugen von Puls-förmigem gepumpten Licht, einer Detektionseinrichtung sowie einer ersten und zweiten Zeitverzögerungseinrichtung vorgesehen ist, und ermittelte Daten nachfolgend korrigiert werden.

Die DE 10 2016 103 298 A1 beschreibt eine THz-Messvorrichtung zum Ermitteln mindestens einer Schichtdicke mindestens einer Schicht eines Prüfobjektes mittels einer Laufzeitmessung, wobei in der optischen Achse einer THz-Sensor- und Empfangseinheit ein Spiegel zum Reflektieren von durch das Prüfobjekt gelangter THz-Strahlung vorgesehen ist, und eine Steuer- und Auswerteeinrichtung einen Totalreflexions-Peak in der detektierten reflektierten Strahlung ermittelt, um nachfolgend Schichtdicken eines Prüfobjekts zu ermitteln.

Die DE 10 2011 112 697 A1 beschreibt ein Verfahren und eine Vorrichtung zum Bestimmen einer Substanz unter Verwendung von THz-Strahlung, wobei Eigenschaften einer Flüssigkeit ermittelt werden, und zusätzlich zu der Flüssigkeit ein Gas vorgesehen ist, insbesondere in einem Behälter mit der Flüssigkeit und mit einer über der Flüssigkeit vorgesehenen Blase mit dem Gas. Hierbei werden Messungen an Grenzflächen durchgeführt.

Der Erfindung liegt die Aufgabe zugrunde, ein THz-Messverfahren und eine THz-Messvorrichtung zur Erfassung eines Materiestroms, insbesondere aus Festkörper-Partikeln, zu schaffen, das eine sichere, genaue sowie kontinuierliche Erfassung des Materiestroms ermöglicht.

Diese Aufgabe wird durch ein THz-Messverfahren und eine THz- Messvorrichtung nach den unabhängigen Ansprüchen gelöst. Die Unteransprüche beschreiben vorzugsweise Weiterbildungen. Weiterhin werden eine Anordnung aus einer THz-Messvorrichtung und einer Führungseinrichtung zum Führen des Materiestroms und ein Verfahren, insbesondere Extrusionsverfahren, zum Herstellen eines Produktionskörpers, unter Einsatz der THz-Messvorrichtung und/oder des THz-Messverfahrens geschaffen.

Das erfindungsgemäße THz-Messverfahren kann insbesondere mit der erfindungsgemäßen THz-Messvorrichtung durchgeführt werden. Die erfindungsgemäße THz-Messvorrichtung ist insbesondere zur Durchführung des erfindungsgemäßen THz-Messverfahrens vorgesehen.

Bei der erfindungsgemäßen THz-Messvorrichtung ist insbesondere die Steuer- und Auswerteeinrichtung eingerichtet zur Durchführung eines erfindungsgemäßen Verfahren zum Erfassen eines Materiestroms.

Somit wird ein THz-Sendestrahl entlang einer optischen Achse durch einen Materiestrom, insbesondere eine Führungseinrichtung zum Führen eines Materiestrom geleitet und an mindestens einem Reflektor-Spiegel zumindest teilweise zurück zu dem THz-Sensor reflektiert, der als Messsignal eine Signalamplitude liefert, insbesondere in Abhängigkeit von Peakpositionen, die je nach Messprinzip unterschiedliche Parameter sein können. Bei einer direkten Laufzeitmessung entsprechen die Peakpositionen Zeiteinheiten, z. B. im Pikosekundenbereich. Bei einer Frequenzmodulation können die Peakpositionen Frequenzeinheiten sein. Erfindungsgemäß wird in der Signalamplitude des THz-Sensors ein Reflektor-Peak des Reflektor-Spiegels ermittelt. In der THz-Messvorrichtung ist entsprechend eine Steuer- und Auswerteeinrichtung intern oder extern an dem THz-Sensor vorgesehen, die eine entsprechende Auswertung der Signalamplitude vornimmt.

Die THz-Strahlung kann insbesondere im Frequenzbereich zwischen 5 GHz und 50 THz, insbesondere zwischen
einem der nachfolgenden unteren Werte von 10 GHz, 30 GHz oder 300 GHz und einem der nachfolgenden oberen Werte von 3 THz, 5 THz oder 10 THz eingesetzt werden, wobei eine Signalamplitude ermittelt werden kann als z.B. direkte Laufzeit-Messung der THz-Strahlung oder Frequenzverschiebung bei frequenzmodulierter THz-Strahlung, weiterhin auch bei gepulster Strahlung.

Das erfindungsgemäße Verfahren sieht insbesondere vor, dass der THz-Sendestrahl im Frequenzbereich von Terahertz-, Radar- oder Mikrowellenstrahlung liegt, insbesondere zwischen 5 GHz und 50 THz, insbesondere zwischen einem unteren Wert von 10 GHz, 30 GHz oder 300 GHz und einem oberen Wert von 3 THz, 5 THz oder 10 THz,
wobei die Signalamplitude ermittelt wird als z.B. direkte Laufzeit-Messung der THz-Strahlung oder Frequenzverschiebung bei frequenzmodulierter THz-Strahlung.

Der THz-Sendestrahl kann insbesondere senkrecht zu der Transportrichtung des Materiestroms, d.h. insbesondere senkrecht zu dessen Führungseinrichtung eingestrahlt werden, aber auch unter jeglichen anderen Winkel zum ausgerichtet sein.

Da der THz-Sendestrahl in Abhängigkeit der technisch-physikalischen Eigenschaften des Materiestroms beeinflusst wird, wird auch der Reflektor-Peak beeinflusst, so dass in der Signalamplitude der Reflektor-Peak und/oder ein weiterer, z.B. vor dem Reflektor-Peak angeordneter Signalabschnitt bewertet werden kann.

Hierbei sind verschiedene Messverfahren bzw. Weiterbildungen vorgesehen, die insbesondere die Veränderung des Reflektor-Peaks, und/oder der weiteren Signalabschnitte vor dem Reflektor-Peak erfassen und bewerten. So kann insbesondere eine Kalibriermessung ohne Materiestrom bzw. mit leerer Führungseinrichtung vorgenommen werden und nachfolgend Veränderungen bei der gleichen Messung mit Materiestrom erfasst werden, und/oder es werden Messungen des Materiestroms an zwei in Strömungsrichtung versetzten Mess-Positionen vorgenommen und verglichen.

Den verschiedenen Messprinzipien und Bewertungen beruhen im Wesentlichen darauf, dass der Reflexions-Peak bei Durchqueren des Materiestroms durch die Materie-Partikel verschoben, geschwächt, verbreitert und/oder mit zusätzlichen Signalanteilen versehen wird, sodass aus verschiedenen Bewertungen der Signalamplitude physikalisch-technische Eigenschaften, insbesondere eine Materiedichte und/oder ein Materiedurchsatz ermittelt werden können.

Bei einer Bewertung der Signalverschiebung kann die Permittivität bewertet werden, wobei der THz-Strahl beim Durchqueren einer Materie in Abhängigkeit von deren Brechungsindex, d.h. dem Verhältnis der Lichtgeschwindigkeit zur Vakuum-Lichtgeschwindigkeit verzögert wird. Bei Materialien wie Kunststoff, Gummi usw. liegt der Brechungsindex z. B. im Bereich von 1,3 bis 1,7, sodass eine deutliche Signalverschiebung gemessen werden kann. Somit kann der Reflektor-Peak in dem Signaldiagramm zunächst an einer Kalibriermessung erfasst und nachfolgend beim Durchqueren der Materie eine Signalverschiebung bzw. Verzögerung des Peaks detektiert werden, die dann der Gesamt-Materiemenge in dem optischen Pfad zugeordnet werden kann.

Bei einer Bewertung der Signalhöhe des Reflektor-Peaks wird das Prinzip ausgenutzt, dass der THz-Strahl beim Durchqueren des Materiestroms geschwächt wird. Diese Schwächung kann durch direkte Absorption bzw. Energieaufnahme der Materie bzw. des Materials erfolgen, die von den chemischen Eigenschaften, aber auch z. B. der aufgenommenen oder adsorbierten Feuchtigkeit der Materie abhängt. Weiterhin findet beim Durchtritt der THz-Strahlung durch die Materie-Partikel jeweils beim Eintreten und Austreten in die Materie, d. h. an den Grenzflächen, eine teilweise Reflektion statt, bei der z. B. 1 bis 5 % der Intensität reflektiert wird und somit nicht mehr in der durchgelassenen Signalamplitude enthalten sind. Die Körner können je nach Größe einen Teil oder den gesamten Querschnitt des THz-Sendestrahls erfassen, sodass die Schwächung des Reflektor-Peaks ein Maß dafür ist, wie viel Materie insgesamt in dem optischen Pfad vorliegt. Eine derartige Messung wird z. B. nicht direkt auf die Masse umgerechnet, da auch die Anzahl der Grenzflächen, d. h. die Größe und Ausrichtung der Körner relevant ist; es können jedoch insbesondere relative Änderungen erfasst werden, z.B. durch Proben- Klassifizierungen von Materieströmen und an verschiedenen Mess-Positionen.

Eine Bewertung kann auch durch die Erfassung einer Peakbreite, z. B. Halbwertsbreite (FWHM) oder Varianz des Reflektor-Peaks erfolgen. Dem liegt die Überlegung zugrunde, dass durch die Materie in dem optischen Pfad unterschiedliche Verzögerungen des Strahls erfolgen, die sowohl zu einer instantanen Signalverbreiterung des Reflektor-Peaks führen oder auch eine Varianz in Bezug auf die Streubreite der Peakposition bei aufeinanderfolgenden Messungen hervorrufen.

Eine Bewertung kann auch Reflektionsanteile in Peakpositionen der Signalamplitude außerhalb des Reflektions-Peaks erfassen, die insbesondere durch die zu messenden Partikel durch direkte Reflektionen hervorgerufen werden.

Erfindungsgemäß sind jeweils zum einen direkte Erfassungen und Bewertungen an Messpositionen möglich, insbesondere mit vorherigen Kalibrierungen an der leeren Führungseinrichtung und/oder an Vergleichs-Materieströmen.

Erfindungsgemäß kann ein relativer Vergleich zu verschiedenen Zeitpunkten an einer Messposition erfolgen.

Erfindungsgemäß kann ein Vergleich einer Messung an einer ersten Messposition oder Messebene mit mindestens einer weiteren Messung an einer weiteren (zweiten) Messposition oder Messebene erfolgen, insbesondere mit einem Abstand zwischen den Messpositionen oder Messebenen, insbesondere einem Abstand in Förderrichtung oder Längsachse einer Materiestrom-Führungseinrichtung.

Erfindungsgemäß sind insbesondere auch relative Messungen möglich, um Änderungen zu messen, insbesondere um Bereiche des Materiestroms an unterschiedlichen Messpositionen wiederzuerkennen. So können bei den unterschiedlichen Messprinzipien Materieansammlungen oder Partikel, z. B. auch größere, spezifische Materiekörner im Materiestrom als spezifische oder signifikante Strukturen oder Muster in der Signalamplitude oder einer hieraus berechneten Signaleigenschaft erfasst und bei einem Weitertransport an einer anderen Messposition nachfolgend wiedererkannt werden.

Insbesondere kann aus dem Sendestrahl mindestens ein Teilstrahl ausgekoppelt werden, und die Teilstrahlen können dann an verschiedenen Mess-Positionen, insbesondere parallel zueinander mit definiertem geometrischem Abstand durch die Führungseinrichtung geführt werden, bei nachfolgender Einkopplung der reflektierten Teilstrahlen. Somit können bei sämtlichen Messprinzipien die erfassten Materiestrom-Bereiche an verschiedenen Messpositionen detektiert und wiedererkannt werden, sodass Messungen zu verschiedenen Zeitpunkten bzw. Messpositionen nachfolgend miteinander verglichen werden können. Aus der ermittelten Transportzeit und dem bekannten geometrischen Abstand der Messpositionen kann dann eine Transportgeschwindigkeit des Materiestroms ermittelt werden.

Hierbei lassen sich Laufzeitmessungen mit einer Zeitskala z. B. im Pikosekundenbereich in der Signalamplitude und mehrere aufeinander folgende, z. B. im Millisekundenbereich durchgeführte Messungen deutlich trennen.

In einer einzigen Signalamplitude können zwei oder mehr Signalbereiche den verschiedenen Messpositionen zugeordnet werden, sodass direkt aus der Signalamplitude ein Zeitabstand zwischen den Signalbeiträgen der Messpositionen ermittelt wird.

Grundsätzlich können somit mehrere, auch mehr als zwei, Messpositionen in der gemeinsamen Signalamplitude erfassen, wobei die zusätzlichen Auskopplungen und Einkopplungen z.B. erfolgen können, indem der Reflektor bzw. die Reflektoren teildurchlässig sind und somit der durchgelassene Anteil zu einer anderen Messposition geführt, wird, mit vorzugsweise hinreichendem Laufzeitunterschied für eine Trennung der Signalbeiträge in der gemeinsamen Signalamplitude.

Somit kann insbesondere auch mit einer Messvorrichtung mit relativ geringem Hardwareaufwand durch unterschiedliche Auswertungen bzw. Bewertungsverfahren eine umfassende Auswertung erfolgen, wobei die verschiedenen Messprinzipien synergistisch zusammenwirken. So erfasst z. B. das Messprinzip der Permittivität bzw. Signalverzögerung durch den Brechungsindex die reine Materiemenge im optischen Pfad, weiterhin das Messprinzip der Signalabsorption nicht nur die reine Materiemenge und chemischen Eigenschaften, sondern auch die Form und Anzahl der Körner.

Auch ermöglichen z. B. frequenzmodulierte Sensoren bei der Erfassung der Signalbreite bzw. Frequenzverschiebung durch den Dopplereffekt eine Berücksichtigung der Lateralgeschwindigkeit der Partikel, d.h. einer Bewegungskomponente senkrecht zur Transportrichtung, die als ergänzende Eigenschaften sich z.B. in der Signalbreite oder Peakbreite und -position niederschlagen.

Weiterhin kann eine Kombination bzw. Kopplung mit weiteren Sensoren vorgesehen sein, um Ergebnisse kalibrieren zu können, um eine quantitative Erfassung zu ermöglichen, und die Ergebnisse abzusichern.

Anders als z.B. in der US 2017/0322064A1 ist erfindungsgemäß vorteilhafterweise nicht die Detektion von spezifischen Resonanzen einzelner Phasen bei bestimmten Frequenzen einer multifrequenten Strahlung vorgesehen, sondern die Ermittlung eines Reflektor-Peaks und einer Signaleigenschaft des Reflektor-Peaks und/oder eines durch den Reflektor-Peak definierten Signalabschnitts in der Signalamplitude. Die Signaleigenschaft des Reflektor-Peaks und/oder des den Reflektor-Peak definierten Signalabschnitts kann dann nachfolgend bewertet werden, insbesondere als relativer Vergleich zu einer Kalibriermessung und/oder als relativer Vergleich an unterschiedlichen Messpositionen entlang einer Förderrichtung des Materiestroms oder der Führungseinrichtung.

Indem relative Änderungen durch einen Vergleich erfasst werden, insbesondere relative zeitliche Änderungen an einer Messposition und/oder Vergleiche von zwei verschiedenen Messpositionen, können relevante Bewertungen erfolgen. So kann z.B. ein Signalabschnitt, der für den Materiestrom an einer Messposition zu einem ersten Zeitpunkt in der Signalamplitude charakteristisch ist, zu einem späteren Zeitpunkt an einer zweiten Messposition wieder erkannt werden. Somit kann z.B. die Fließgeschwindigkeit und/oder der Materiedurchsatz des Materiestroms ermittelt werden, sodass eine Berechnung des Materiedurchsatzes vorzugsweise durch eine elektromagnetische Messung ohne Beeinflussung des Materiestromes, d.h. z.B. ohne ein mechanisches Flügelrad zur Erfassung einer Fließgeschwindigkeit möglich ist.

Es zeigt sich, dass ein Vergleich von z.B. Signalabschnitten sehr genaue Werte liefert; ein derartiger Vergleich liefert z.B. auch eine Mittelung über einen Bereich des Materiestromes, d.h. über die unterschiedlichen Geschwindigkeiten der einzelnen Materieteilchen, die in dem Materiestrom jeweils entsprechend mit einer Geschwindigkeitsverteilung, d.h. mit Geschwindigkeitswerten um einen mittleren Geschwindkeitswert herum fließen. Der Vergleich der Signalabschnitte liefert vorzugsweise bereits einen derartigen gemittelten Wert.

Erfindungsgemäß weisen die erste und (mindestens) zweite Messposition und/oder Messebene insbesondere jeweils einen Abstand in Förderrichtung oder entlang der Längsachse einer Materiestrom-Führungseinrichtung auf.

Bei einem Produktionsverfahren, wie z. B. einer Extrusion von zugeführten Pulvern oder Granulaten kann somit eine sehr genaue Inline-Erfassung bzw. aktuelle Erfassung der Materie und des Materiedurchsatzes erfolgen, die eine genaue Regelung ermöglicht, um entsprechende Materiedurchsatz-Werte einzustellen.

Das erfindungsgemäße Verfahren zum Herstellen eines Produktionsobjektes ermöglicht eine besonders vorteilhafte, genaue inline-Erfassung des Materiestroms während der Herstellung. Somit wird eine sehr gleichmäßige Ausbildung ermöglicht.

Erfindungsgemäß kann z.B. ein Rohr hergestellt werden, wobei erfindungsgemäß der Vorteil einer gleichmäßige Ausbildung einer Wand insbesondere eine gleichmäßige Wandstärke, erreicht wird.

Bei der Herstellung eines Extrusionsobjektes kann in Abhängigkeit des ermittelten Materiedurchsatzes bzw. Materiestromes zum einen die Materiezufuhr bzw. Förderleistung der Zuführeinrichtung eingestellt bzw. geändert werden, und/oder es kann eine Produktionseinstellung, z.B. die Abzugsgeschwindigkeit des extrudierten Objektes eingestellt bzw. geändert werden.

Erfindungsgemäß kann insbesondere ein Materiestrom mit Festkörper-Partikeln wie z.B. eine Granulat, einem Pulver, oder auch Flocken bzw. Häckselware oder Fasern vermessen werden. Der Materistrom kann zur Herstellung von Objekten aus z.B. Kunststoff, Gummi, Fasern oder entsprechenden Festkörper-Materialien eingesetzt werden.

Weiterhin kann auch ein Materiestrom zur Herstellung von Lebensmitteln vermessen werden, z.B. einem Pulver wie Mehl, weiterhin auch Körner, Fasern usw. Hierbei könne auch unterschiedliche Ausgangsstoffe jeweils als Materiestrom zugeführt und vermessen werden, um entsprechend Mischungsverhältnisse auszubilden.

Weiterhin können auch z.B. Tabletten, z.B. als Medizin, aus einem Materiestrom oder mehreren Materieströmen, die vermessen werden, hergestellt werden.

Die Materieströme können insbesondere in einem Gas wie Luft befördert und/oder aufgeschwemmt werden, z.B. auch als Fluidisierung von körnigen oder pulverförmigen Materiestücken in Luft oder Gas, woraufhin dieser Materiestrom dann gemessen wird.

Das erfindungsgemäße THz-Messverfahren und die -Messvorrichtung lassen sich nicht nur für Regelungen eines Materiedurchsatzes einsetzen, sondern allgemein zur Charakterisierung von Materialbewegungen.

Die Erfindung wird im Folgenden anhand der beiliegenden Zeichnungen an einigen Ausführungsformen von Messvorrichtungen und Messverfahren näher erläutert. Es zeigen:
- Fig. 1, 2, 3: eine THz-Messvorrichtung gemäß einer ersten, zweiten und dritten Ausführungsform zur Erfassung eines Materiestroms an zwei Messpositionen;
- Fig. 4: ein Diagramm einer Signalamplitude in Abhängigkeit der Zeit der Messungen aus Fig. 1 bis 3;
- Fig. 5: eine THz-Messvorrichtung gemäß einer Ausführungsform zur Erfassung eines Materiestroms durch Ermittlung einer Permittivität als Pulsverschiebung, insbesondere zur Erfassung eines Materiedurchsatzes durch Korrelation der Referenzpositionen, mit a) einer Kalibriermessung und b) deren Signalamplitude, c) einer ersten Materiestrommessung und d) deren Signalamplitude, e) einer zweiten Materiestrommessung und f) deren Signalamplitude, und g) die Peak-Position als Funktion des Materiedurchsatzes;
- Fig. 6: eine THz-Messvorrichtung gemäß einer Ausführungsform zur Erfassung eines Materiestroms durch Ermittlung einer Amplitudenhöhe oder Amplitudenschwächung, insbesondere zur Erfassung eines Materiedurchsatzes durch Korrelation der Referenzamplitude, mit a) einer Kalibriermessung und b) deren Signalamplitude; c) einer ersten Materiestrommessung und d) deren Signalamplitude, e) einer zweiten Materiestrommessung und f) deren Signalamplitude, und g) die durch den Materiestrom beeinflusste Amplitude des Referenzspiegels in Abhängigkeit des Materiedurchsatzes;

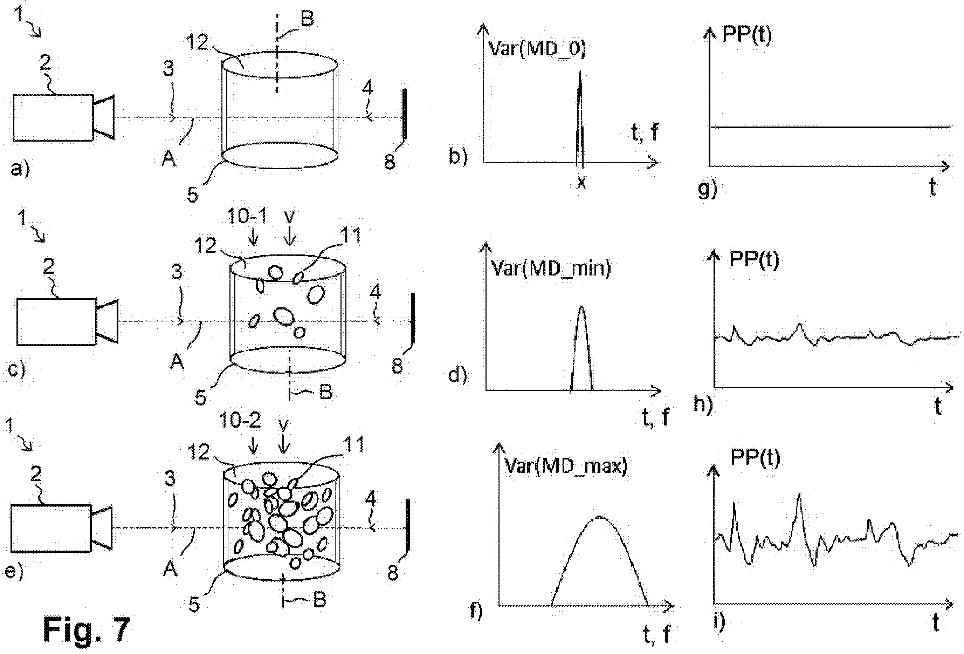

- Fig. 7: eine THz-Messvorrichtung gemäß einer Ausführungsform zur Erfassung eines Materiestroms durch Ermittlung einer Peakbreite oder Varianz, insbesondere zur Erfassung eines Materiedurchsatzes durch Korrelation der Varianz, mit a) einer Kalibriermessung und b) deren Signalamplitude einer Einzelmessung; c) einer ersten Materiestrommessung und d) deren Signalamplitude einer Einzelmessung, e) einer zweiten Materiestrommessung und f) deren Signalamplitude einer Einzelmessung, g) einer Darstellung der Varianz bzw. Streuung über mehrere Messungen der Messung aus a), b) h) einer Darstellung der Varianz bzw. Streuung über mehrere Messungen der Messung aus c), d) i) einer Darstellung der Varianz bzw. Streuung über mehrere Messungen der Messung aus e), f)
- Fig. 8: eine THz-Messvorrichtung gemäß einer Ausführungsform zur Erfassung eines Materiestroms durch Ermittlung weiterer Reflexionsanteile außerhalb des Reflektor-Peaks, insbesondere zur Erfassung eines Materiedurchsatzes durch Korrelation der Streuleistung, mit a) einer Kalibriermessung und b) deren Signalamplitude; c) einer ersten Materiestrommessung und d) deren Signalamplitude, e) einer zweiten Materiestrommessung und f) deren Signalamplitude, und g) einem Diagramm der Streuleistung in Abhängigkeit des Materiedurchsatzes;
- Fig. 9: eine THz-Messvorrichtung gemäß einer Ausführungsform mit Einund Auskopplung von Teilstrahlen an zwei Mess-Positionen, zur Ermittlung der Pulsverschiebungen entsprechend Fig. 5;
- Fig. 10: eine Ausführungsform der Ermittlung eines Materiedurchsatzes durch Autokorrelation gemäß Fig. 9:
- Fig. 11: eine THz-Messvorrichtung gemäß einer Ausführungsform mit Einund Auskopplung von Teilstrahlen an zwei Mess-Positionen, zur Ermittlung der Signalamplitudenhöhen entsprechend Fig. 6, mit Autokorrelation der Amplitudenverläufe;
- Fig. 12: eine Ausführungsform einer Extrusions-Anordnung mit einer THzMessvorrichtung gemäß einer Ausführungsform der Erfindung als Regelung eines Herstellungsverfahrens;
- Fig. 13: ein Diagramm der Varianz in Fig. 7 in Abhängigkeit des Materiedurchsatzes.

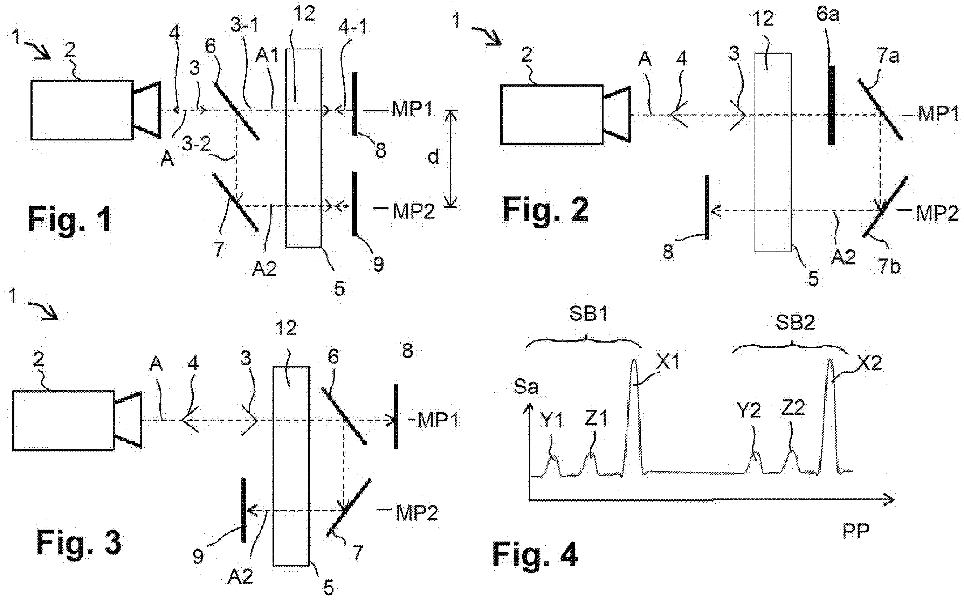

Eine THz-Messvorrichtung 1 weist gemäß der Ausführungsform der Figur 1 einen THz-Sensor 2 auf, der als THz-Transceiver ausgebildet ist, d. h. einen THz-Sendestrahl 3 erzeugt und entlang einer optischen Achse A ausgibt, und weiterhin einen THz-Reflexionsstrahl 4, der entlang der optischen Achse A zurück reflektiert wird, detektiert. Die THz-Messvorrichtung 1 weist mehrere Messpositionen MP1, MP2 auf, die in dieser Ausführungsformen in unterschiedlichen Mess-Ebenen liegen. Eine Materiestrom- Führungseinrichtung 5 ist z. B. als Kunststoff-Rohr ausgebildet, hier mit senkrechtem Verlauf. Die THz-Messvorrichtung 1 weist weiterhin optische Mittel zum Umlenken, Auskoppeln und Einkoppeln des THz-Sendestrahls 3 und des THz-Reflexionsstrahls 4 auf. Gemäß der Ausführungsform der Figur 1 ist zunächst in der optischen Achse A des THz-Sensors 2 eine Ein- und Auskoppeleinrichtung, z. B. ein halbdurchlässiger Spiegel 6, vorgesehen, der hier mit schrägem Verlauf gegenüber der optischen Achse A angeordnet ist und somit den einfallenden THz-Sendestrahl 3 in zwei THz-Teilstrahlen 3-1 und 3-2 aufteilt:
Der durchgelassene Anteil verläuft als erster optischer THz-Sende-Teilstrahl 3-1 entlang einer ersten optischen Messachse A1, die hier somit insbesondere mit der optischen Achse A des THz-Sensors 2 übereinstimmt. Der ausgekoppelte Anteil wird als zweiter optischer THz-Sende-Teilstrahl 3-2 gemäß dieser Ausführungsform nachfolgend durch einen Umlenkspiegel 7 in eine zweite optische Messachse A2 umgelenkt. Die erste optische Messachse A1 ist in der ersten Messposition MP1 bzw. der ersten Messebene vorgesehen;
entsprechend definiert die zweite optische Messachse A2 die zweite Messposition MP2 bzw. zweite Messebene. Der erste THz-Sende-Teilstrahl 3-1 verläuft entlang der ersten optischen Messachse A1 durch die Führungseinrichtung 5 und trifft senkrecht auf einen ersten Reflektor-Spiegel 8, so dass er wiederum entlang der ersten optischen Messachse A1 zurück reflektiert wird, (teilweise) durch den halbdurchlässigen Spiegel 6 tritt und wiederum entlang der optischen Achse A zu dem THz-Sensor 2 verläuft.

Der ausgekoppelte THz-Sende-Teilstrahl 3-2 verläuft entlang der zweiten optischen Messachse A2 senkrecht durch die Führungseinrichtung 5 und senkrecht auf einen zweiten Reflektor-Spiegel 9, so dass er wiederum entlang der zweiten optischen Messachse A2 zurück reflektiert wird, vom Umlenkspiegel 7 zurück zu dem halbdurchlässigen Spiegel 6 reflektiert wird und - teilweise - wiederum entlang der optischen Messachse A zu dem THz-Sensor 2 zurück reflektiert wird, d.h. eingekoppelt wird. Die Teilstrahlen überlagern sich somit wiederum zu einem gemeinsamen THz-Reflexions-Strahl 4 und können somit in einer gemeinsamen Signalamplitude Sa des THz-Sensors 2 detektiert werden. Durch den Abstand d zwischen den Mess-Positionen MP1, MP2 wird somit in dem gemeinsamen Signal mit der kombinierten Amplitude des THz-Sensors 2 ein Versatz definiert, der nachfolgend mit Bezug zu Figur 4 weiter erläutert wird.

Die Reflektor-Spiegel 8, 9 reflektieren vorteilhafterweise vollständig, könen aber auch teilweise reflektieren, d.h. teildurchlässig sein. So kann der einfallende THz-Sendestrahl auch teilweise durchgelassen werden, um ihn z.B. an einer weiteren Messposition wiederum einzusetzen. Somit kann das Verfahren grundsätzlich auf eine hohe Zahl von Messpositionen ausgeweitet werden, deren Signalbeiträge dann vorzugsweise aufgrund der Laufzeiten in der gemeinsamen Signalamplitude getrennt sind, um sie entsprechend aufnehmen zu können.

Figur 4 zeigt die vom THz-Sensor 2 erzeugte Signalamplitude Sa, die hier allgemein in Abhängigkeit von Peakpositionen PP angegeben ist. Der THz-Sensor 2 kann je nach Ausbildung eine Messung direkt der Laufzeit der THz-Strahlung vornehmen, d. h. die Signalamplitude Sa in Abhängigkeit der Zeit t ausgeben, d.h. die Peakpositionen PP entsprechen Zeiteinheiten, z.B. Zeitabständen im Pikosekundenbereich.

Alternativ hierzu kann der THz-Sensor 2 den THz-Sendestrahl auch frequenzmoduliert ausgeben und nachfolgend den THz-Sendestrahl 3 und THz-Empfangsstrahl 4 überlagern, wobei die zueinander frequenzverschobenen Signale eine Schwebung bzw. Überlagerung bilden, d.h. die Peakpositionen PP sind Frequenzbereiche oder Frequenzeinheiten, aus denen dann die Laufzeit ermittelt werden kann. So kann z.B. ein FMCW-Radar eingesetzt werden, insbesondere in FMCW-THz-Technologie, bei der sowohl eine Frequenz- als auch eine Phasenauswertung angewendet wird, um z.B. Amplitudenpositionen bzw. Grenzflächenpositionen wie z.B. beim Reflektor zu bestimmen.

Somit sind in den Figuren für die Ermittlung der Laufzeit allgemein Peakpositionen PP angegeben, die entsprechend jeweils physikalisch als Laufzeiten interpretiert werden können. Da in den folgenden Darstellungen auch dynamische Messvorgänge beschrieben werden, bei denen sich somit zeitlich ändernde technische Abläufe, z. B. ein Materiestrom beschrieben wird, ermöglicht die Bezeichnung als Peak-Position PP eine bessere Unterscheidbarkeit zur unterschiedlichen Mess-Zeit t der dynamischen Vorgänge, die z.B. Messeinheiten im Millisekundenbereich anzeigt.

Gemäß Figur 4 wird eine Signalamplitude Sa aufgenommen, die einen ersten Signalbereich SB1 aufweist, der in der ersten Messposition MP1 entlang der ersten optischen Messachse A1 erzeugt worden ist, und einen zweiten Signalbereich SB2, der in der zweiten Messposition MP2, bzw. entlang der zweiten optischen Messachse A2 erzeugt worden ist. In der gemeinsamen Signalamplitude Sa können beide Signalbereiche SB1 und SB2 zueinander in Beziehung gesetzt und trotzdem bei der Auswertung deutlich getrennt werden, insbesondere wenn der Abstand d hinreichend groß gewählt wird. Figur 1 zeigt eine Leermessung bzw. Kalibriermessung, d. h. ohne Materiestrom in der Führungseinrichtung 5, so dass hier in dem ersten Signalbereich SB1 ein erster großer Reflektorpeak X1 gemessen werden kann, der durch die Reflexion an dem ersten Reflektor-Spiegel 8 ausgebildet wird,
und entsprechend in dem zweiten Signalbereich SB2 ein zweiter großer Reflektorpeak X2, der durch die Reflexion an dem zweiten Reflektor-Spiegel 9 erzeugt worden ist.

Weiterhin tritt in jedem Signalbereich SB1 und SB2 jeweils vor dem großen Reflektorpeak X1 bzw. X2 beim Durchtritt in die Führungseinrichtung 5 entlang der ersten optischen Messachse A1 ein vorderer Durchtritts-Messpeak Y1 und entlang der zweiten optischen Messachse A2 ein vorderer Durchtritts- Messpeak Y2, und nachfolgend beim Austritt aus der Führungseinrichtung 5 entlang der ersten optischen Messachse A1 ein hinterer Durchtritts- Messpeak Z1, und entlang der zweiten optischen Messachse A2 ein hinterer Durchtritts- Messpeak Z2 auf. Bei einer genaueren Betrachtung des Durchtritts der Wände der Führungseinrichtung 5 können die jeweiligen Durchtritts- Messpeak Y, Z auch zwei Peaks darstellen, nämlich jeweils Ein- und Austritt in die Rohrwand.

Auch lassen sich die Peaks Y, Z gegebenenfalls auch vermeiden, indem die Wände der Führungseinrichtung 5 bewusst nicht orthogonal zu den optischen Achsen A1 und A2 ausgerichtet werden.

Figur 2 und 3 zeigen beispielhaft weitere mögliche Ausbildungen einer THz-Messvorrichtung 1, die Messungen in zwei Messpositionen MP1 und MP2, d.h. insbesondere in zwei optischen Mess-Achsen A1 und A2 bzw. in zwei Messebenen durch die Führungseinrichtung 5 ermöglichen. Gemäß der Ausführungsform der Figur 2 sendet der THz-Sensor 2 den THz-Sendestrahl 3 direkt durch die Führungseinrichtung 5, d.h. seine optische Achse A bildet direkt die erste optische Messachse A1, ohne optische Mittel zwischen dem THz-Sensor 2 und der Führungseinrichtung 5. Hinter der Führungseinrichtung 5 ist als Ein- und Auskoppeleinrichtung eine halbdurchlässige Platte 6a senkrecht zur optischen Achse A positioniert, so dass sie einen Teil des durch die Führungseinrichtung 5 gelangten THz-Sendestrahls 3 als THz-Reflexions- Teilstrahl direkt zurücksendet; hierdurch wird wiederum der erste Signalbereich SB1 gemäß Figur 4 gebildet. Der weitere Anteil durch die halbdurchlässige Platte 6a gelangten THz-Sendestrahls 3 wird über zwei Umlenkspiegel 7a, 7b zu der zweiten Messposition MP2, d.h. der zweiten Messebene umgelenkt, und gelangt dort wiederum entlang einer zweiten optischen Messachse A2 durch die Führungseinrichtung 5, woraufhin der THz-Strahl durch den hinter der Führungseinrichtung 5 vorgesehen, senkrecht zur zweiten optischen Messachse A2 angeordneten zweiten Reflektor-Spiegel 9 zurück reflektiert wird. Gemäß dieser Ausführungsform bildet somit die Reflektion an der halbdurchlässigen Platte 6a den ersten Reflektor-Peak X1 des ersten Signalbereichs SB1 von Figur 4, und die Reflexion am Reflektor- Spiegel 9 wiederum den zweiten Reflektor-Peak X2 des Signalbereichs SB2. Ein Unterschied dieser Ausführungsform der Figur 2 gegenüber der Ausführungsform von Figur 1 ist unter anderem, dass der in die zweite Messposition MP2 eingeleitete THz-Strahl bereits in der ersten Messposition MP1 durch die Führungseinrichtung 5 durchgetreten ist; insbesondere bei den nachfolgend beschriebenen Messungen mit einem durch die Führungseinrichtung 5 tretenden Materiestrom kann diese Schwächung erheblich sein und insbesondere auch das Messsignal bereits beeinflussen, so dass die Messungen in den Messpositionen MP1 und MP2 nicht voneinander unbeeinflusst sind.

Gemäß der Ausführungsform der Figur 3 trifft der THz-Sendestrahl 3 entlang der optischen Achse A, die wiederum auch die erste optische Messachse A1 bildet, direkt in der ersten Messposition MP1 durch die Führungseinrichtung 5 und gelangt hinter der Führungseinrichtung 5 wiederum durch den halbdurchlässigen Spiegel 6, der als Ein- und Auskuppeleinrichtung einen Teilstrahl 3-2 auskoppelt und - entsprechend der Ausführungsform der Figur 1 - zu der zweiten Messposition MP2 umlenkt, in der wiederum der Umlenkspiegel 7 die zweite optische Messachse A2 festlegt, die versetzt und z.B. parallel zu ersten optischen Messachse A1 ausgerichtet ist. Hinter der Führungseinrichtung 5 ist wiederum der zweite Reflektor-Spiegel 9 vorgesehen, der den THz-Strahl senkrecht zurückreflektiert. Somit sind in der Ausführungsform der Figur 3 die gleichen optischen Mittel 6, 7, 8, 9 wie in der Ausführungsform der Figur 1 vorgesehen, allerdings tritt auch hier der THz-Strahl zunächst in der ersten Messposition MP1 durch die Führungseinrichtung 5, so dass die Messungen in den Messpositionen MP1 und MP2 nicht ganz unbeeinflusst voneinander sind.

Bei allen Ausführungsformen können insbesondere auch mehrere Auskopplungen vorgenommen werden, d.h. mehr als zwei Messpositionen MP1, MP2. Alle Ausführungsformen der Fig. 1 bis 3 können in den nachfolgenden Mess-Systemen eingesetzt werden.

Somit lässt sich gemäß Figur 4 ein Signaldiagramm mit mehreren Messbereichen SBi, i=1,2,3,4,... festlegen, deren Abstand in Peak-Positionen PP, d.h. Laufzeitunterschied oder Frequenzabstand, durch den Abstand d der Messebenen festlegbar ist. Durch eine höhere Anzahl von Umlenkspiegeln 7 lässt sich insbesondere auch der Signalabstand zwischen den Signalbereichen SB1, SB2,... vergrößern.

Hierbei kann bei Frequenzmodulation grundsätzlich eine Frequenz- und Phasenauswertung vorgenommen werden.

Weiterhin können zwei oder mehr Messpositionen MP1, MP2 grundsätzlich auch in einer gemeinsamen Messebene festgelegt werden, indem der Umlenkspiegel 7 z.B. den THz-Sendestrahl 3 in einer Messebene umlenkt. So können die optischen Mess-Achsen A1, A2, ... nicht-parallel verlaufen, d.h. z. B sich in der gemeinsamen Messebene oder in verschiedenen parallelen Messebenen kreuzen.

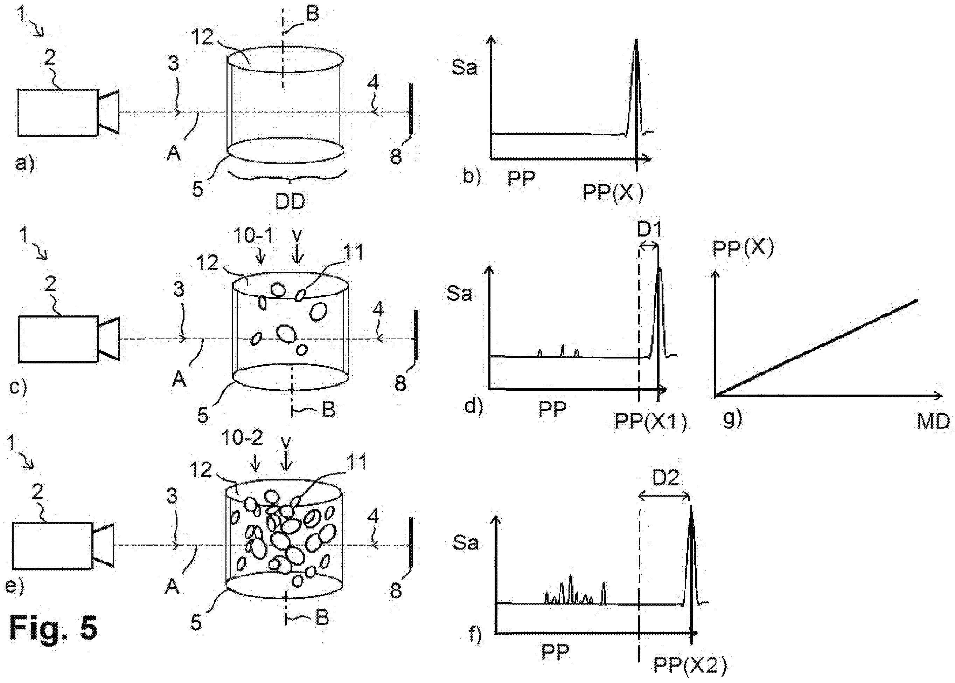

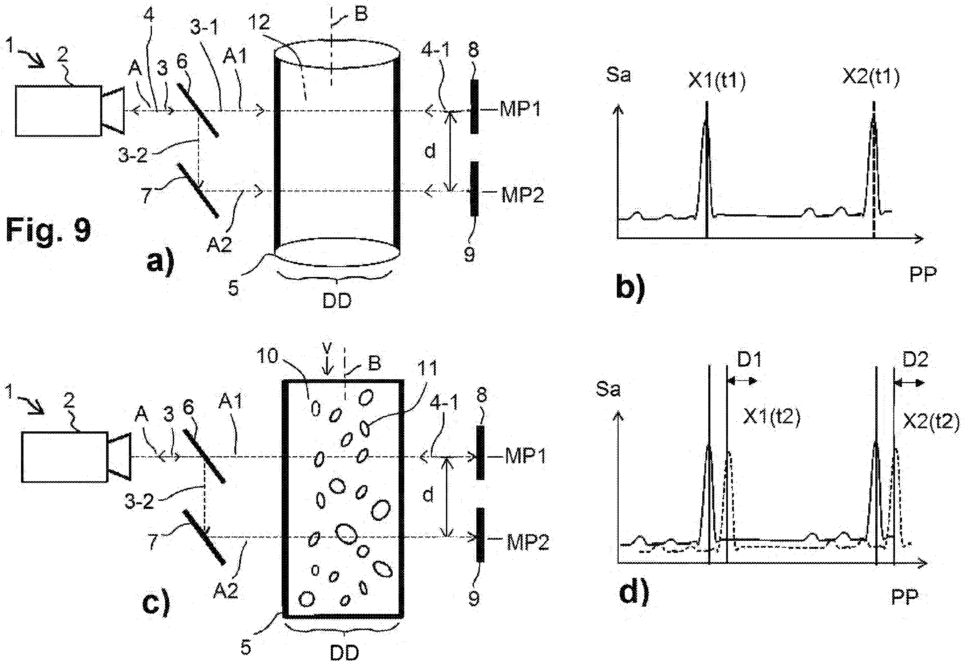

Figur 5 bis 8 zeigen nachfolgend unterschiedliche Messprinzipien bzw. unterschiedliche Verfahren zur Bewertung eines Materiestroms; die nachfolgenden Figuren 9 bis 11 zeigen dann Ausführungsformen von Messvorrichtungen, die diese Messprinzipien in mehreren Messpositionen bzw. Messebenen zur Bewertung und/oder zur Vermessung eines Materiestroms an mehreren Stellen anwenden.

Figur 5 zeigt ein Verfahren zur Bewertung eines Materiestroms 11, insbesondere eine Massendurchsatz-Erfassung, unter Bewertung der Permittivität oder Verschiebung von Referenzpositionen im Signaldiagramm, wobei wiederum ein THz-Sensor 2 einen THz-Sendestrahl 3 entlang einer optischen Achse A aussendet, der an einem Reflektor-Spiegel 8 zurückreflektiert und vom THz-Sensor 2 detektiert wird. Hierbei wird ausgenutzt, dass die Materie eines Materiestroms 10 einen Brechungsindex n10 > 1 aufweist, wobei der Brechungsindex n10 in der Materie als Quotient der Lichtgeschwindigkeiten zur Vakuum-Lichtgeschwindigkeit c0 definiert ist, d. h. n10 = c10 / c0. Somit braucht die THz-Strahlung 3 bzw. 3-1, 3-2 mehr Zeit, um eine gleiche geometrische Strecke zu durchlaufen. In der Signalamplitude Sa verschieben sich somit Peaks nach rechts bzw. zu höheren Peak-Positionen PP, d. h. eine spätere Laufzeit oder entsprechend geänderte Frequenz bei Frequenzmodulation. So zeigt Figur 5a) die THz- Messvorrichtung 1 mit THz-Sensor 2 und Führungseinrichtung 5 sowie dem Reflektor-Spiegel 8 ohne einen Materiestrom 10, d. h. als Kalibriermessung, wobei gemäß b) sich somit eine Signalamplitude Sa mit einem Reflektor-Peak X1 bei einer Peak-Position PP(X) ergibt. Hier sind - zur Veranschaulichung - die Durchtritts-Peaks des THz-Sendestrahls 3 durch die Wände der Führungseinrichtung 5 nicht eingezeichnet.

Figur 5c), d) zeigt eine THz-Messung, bei der ein erster Materiestrom 10-1 aus Festkörper-Teilchen 11 in der Förderrichtung B bzw. Fallrichtung oder Transportrichtung durch die Führungseinrichtung 5 gelangt. Der geometrische Pfad DD im Messraum 12 ist gegenüber Fig. 5a) unverändert. Der Materiestrom 10-1 führt in dem Signaldiagramm Sa der Figur 5d) zum einen zu zusätzlichen Reflexionspeaks, insbesondere verursacht durch direkte Reflektionen an den Grenzschichten der Partikel des Stroms des Materieguts, vor dem Reflektor-Peak X, die hier noch nicht betrachtet werden, und weiterhin aufgrund der verlängerten Durchtrittszeit zu einer Signalverzögerung D1 der Peak-Position PP(X) des Reflektorpeaks X, der hier als Referenzpeak dient. Die Signalverzögerung D1 kann entsprechend als Wert in Peak-Positionen PP ermittelt werden.

Figur 5e), f) zeigt eine entsprechende Messung mit einem dichteren zweiten Materiestrom 10-2, der insbesondere die gleichen oder gleichartigen Festkörper-Partikeln 11, jedoch dichter bzw. mit höherem Massedurchsatz aufweisen kann. Da somit der geometrische Pfad DD entlang der optischen Achse A im Messraum zwar geometrisch gleich lang ist, jedoch zu einem größeren Anteil mit der Materie des zweiten Materiestroms 10-2 belegt ist, braucht der THz-Sendestrahl 3 zeitlich länger, so dass der Reflektor-Peak X somit gemäß dem Signaldiagramm der Figur 5f) wiederum nach rechts, d. h. zu höheren Peak-Positionen PP(X2) verschoben ist, d.h. eine größere Signalverzögerung D2 gegenüber der Kalibriermessung aus Fig. 5a) aufweist.

Somit kann gemäß Figur 5 bereits aus der Signalverzögerung oder Signalverschiebung D1, D2 eines Referenzpeaks, insbesondere des Reflektor-Peaks X des Reflektor-Spiegels 8, der Materiedurchsatz bewertet werden. Jede Messung für sich bewertet zunächst den Anteil von Material in dem optischen Pfad DD der optischen Achse A durch die Führungseinrichtung 5, d.h. zunächst die Dichte des Materiestroms. Diese Signalverzögerung schätzt sehr gut den Material-Anteil bzw. die Dichte der Materie ab, wobei insbesondere die Größe der Material-Partikel 11 das Messergebnis nicht so sehr beeinflusst wie bei der nachfolgenden Messung der Absorption. In jede Messung der Fig. 5c), d) und e), f) geht somit die Geschwindigkeit v des Materiestroms 10-1 oder 10-2 entlang der Förderrichtung B noch nicht ein, so dass der Materiedurchsatz noch nicht direkt ermittelbar ist, wie es dann in Kombination mit der Ausführungsform der Fig. 1-4 gemäß Fig. 9 erfolgt. Figur 5g) zeigt - in einem einfachen Modell - eine Umrechnung zwischen den Peakpositionen PP und der Materiedichte oder Materiedurchsatz MD gemäß diesem Bewertungsverfahren. Hierbei kann insbesondere zunächst eine Umrechnung der Partikelposition PP in die Materialdichte erfolgen, und der Materiedurchsatz nachfolgend unter ergänzender Heranziehung einer ermittelten Materie-Transportgeschwindigkeit v bewertet werden. Gemäß Figur 5g) kann in erster Näherung ein lineares Modell herangezogen werden, da eine größere Materie-Dichte zunächst die Laufzeit entsprechend proportional verlängert.

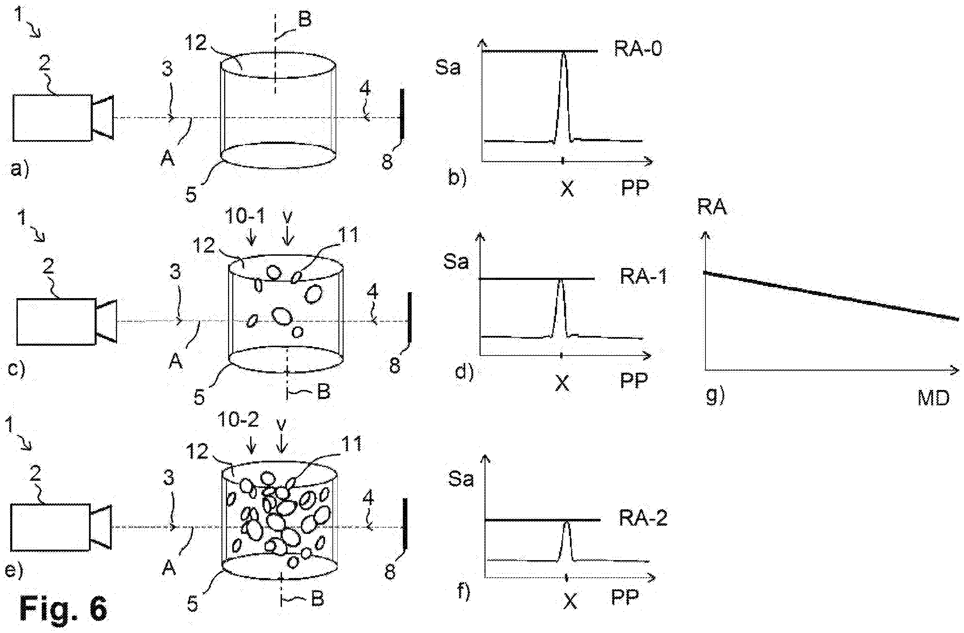

Figur 6 zeigt eine weitere Ausführungsform einer THz-Messvorrichtung 1 und eines Bewertungsverfahrens mit einer Bewertung der Referenz-amplitude X1 des Reflektor-Spiegels 8; somit wird die Höhe der Referenzamplitude X erfasst und bewertet. Gemäß der Kalibriermessung der Figur 6a) ergibt sich in dem Signaldiagramm der Figur 6b) wiederum eine Messung, bei der die Durchtrittspeaks beim Durchtritt des THz-Sendestrahls 3 durch die Wände der Führungseinrichtung 5 nicht eingezeichnet sind. Das Signaldiagramm zeigt wiederum die Signalamplitude Sa als Funktion des Materiedurchsatzes, wobei der Reflektorpeak X eine Referenzamplitude RA-0 festlegt. Bei einem geringeren ersten Materiestrom 10-1 gemäß Figur 6c) bewirken die Material-Partikel 11 eine Abschwächung bzw. Verkleinerung des Reflektorpeaks X, d. h. die Referenzamplitude RA-1 nimmt ab. Dies erfolgt zum einen aufgrund Absorption in der Materie der Materie-Partikel 11, d. h. Energie-Aufnahme in der Materie, die insbesondere von den chemischen Eigenschaften des Materials der Material-Partikel 11 abhängt, wobei auch z. B. die Feuchtigkeit in den Material-Partikeln und auf der Oberfläche der Material-Partikel haftende Feuchtigkeit zu der Absorption beiträgt, da Wasser THz-Strahlung effektiv absorbiert. Weiterhin trägt auch die Streuung/Reflektion des THz-Sendestrahls 3 an den Material-Partikeln 11 zu einer Abschwächung der Signalhöhe bei: So wird der THz-Sendestrahl 3 bei jedem Eintritt in die Oberfläche eines Material-Partikels 11 und entsprechend wiederum beim Austritt aus dem Materie-Partikel 11 teilweise reflektiert, und somit abgeschwächt. Somit bewirken sowohl die Absorption als auch die Streuung des THz-Sendestrahls 3 in der Wegstrecke DD eine Verringerung der Signalamplitude Sa, d. h. die Referenzamplitude RA-1 der Figur 6d ist kleiner als RA-0. Figur 6e) zeigt wiederum einen größeren zweiten Materiestrom 10-2, der entsprechend wiederum zu einer weiteren Verringerung der Referenzamplitude RA-2 führt, da sowohl die Absorption im Material als auch die Streuung durch die Grenzflächen bzw. Oberfläche der Material-Partikel 11 größer wird und hierdurch die Signalhöhe SH-2 verringert wird.

Figur 6g) zeigt wiederum eine mögliche Umrechnung der Referenzamplitude RA auf die Materialdichte oder den Materiedurchsatz MD; hier kann insbesondere zunächst eine Umrechnung auf eine Dichte der Material-Partikel 11 erfolgen, aus der dann der Materiedurchsatz als Materialmenge pro Zeit durch die ergänzende Ermittlung der Geschwindigkeit v ermittelt werden kann. Figur 6g) kann insbesondere somit einen linearen oder logarithmischen Abfall der Signalhöhe SH in Abhängigkeit des Materiedurchsatzes oder der Materialdichte zeigen.

Bei den Verfahren nach Figur 6 gehen somit für eine quantitative Erfassung des Materiestroms zum einen die chemischen Eigenschaften des Materials der Materialpartikel 11, weiterhin der Feuchtegrad und insbesondere auch die Korngröße und Formgebung der Material-Partikel 11 ein, da ein Materiestrom aus vielen kleinen Material-Partikeln 11 zu einer höheren Streuung führen kann als z.B. ein Materiestrom aus großen Materialpartikeln 11, z. B. großen Körnern eines Granulates oder bei Materialflocken.

Indem relative Änderungen erfasst werden, insbesondere relative zeitliche Änderungen an einer Messposition und/oder Vergleiche von zwei verschiedenen Messpositionen, können jedoch bereits relevante Bewertungen erfolgen, wie weiter unten beschrieben wird.

Figur 7 zeigt eine weitere THz-Messvorrichtung und ein Bewertungsverfahren, bei denen eine Peakbreite oder Streubreite aufeinanderfolgender Messungen z.B. als Varianz Var, zur Bewertung des Massendurchsatzes herangezogen wird. Auch hier entsprechen wiederum die Darstellungen der Figur 7 a),c), e) denjenigen der Figur 5 und 6, d.h. Figur 7a) zeigt eine leere Führungseinrichtung 5 als Kalibriermessung und nachfolgend gemäß Figur 7c) eine kleineren ersten Materiestroms 10-1 und Figur 7e) eine größeren zweiten Materiestrom 10-2. Gemäß der Kalibriermessung der Figur 7a) ergibt sich durch die Reflexion an dem Reflektorspiegel 8 ein sehr scharfer bzw. enger Reflektor-Peak X1, d.h. die Peakbreite oder Signalbreite, die nachfolgend zur Vereinfachung als Varianz Var bezeichnet wird, ist gering. Als Varianz kann hierbei gemäß den Figuren 7g), h), i) die stochastisch definierte Varianz ,d.h. eine Streuung der Referenzpeaks als Auswertung über mehrere Einzelmessungen in einem bestimmten Zeitintervall, herangezogen werden, die somit die Anzahl der Peak-Positionen auf der Abszisse PP wiedergibt. Weiterhin kann die Peakbreite jedoch auch z.B. gemäß Fig. 7b), d), f) direkt bei einer oder mehreren Einzelmessungen z.B. als Halbwertsbreite (FWHM) erfasst werden, d.h. die Breite des Signalpeaks bei halber maximaler Signalhöhe. Auch andere Bewertungen der Peakbreite des Reflektorpeaks X1 sind möglich.

Bei der nachfolgenden Messung gemäß Figur 7c) bei dem kleineren ersten Materiestrom 10-1 wird der Reflektorpeak X verbreitert und/oder schwank über die Zeit hin und her. Diese Verbreiterung erfolgt durch die Material-Partikel 11 im Materiestrom 10-1 oder 10-2, da der THz-Sendestrahl 3 und entsprechend der THz-Reflektionsstrahl 4 insbesondere auch keinen punktförmigen Querschnitt entlang der optischen Achse A bilden, sondern mit einer lateralen Erstreckung einen Bereich erfassen, in dem jeweils teilweise Material-Partikel 11 vorliegen und auch Freiräume zwischen den Materialpartikeln 11 erfasst werden. Somit wird die THz-Strahlung 3, 4 teilweise verzögert und je nach Anzahl und Art der Materialteilchen verbreitert. Dies führt bei einer reinen Laufzeit-Ermittlung somit insbesondere zu einer "Verschleppung" bzw. Verzögerung des scharfen Signalpeaks 1 der Kalibriermessung von Figur 7b) nach rechts, da zusätzliches Material zu einer zeitlichen Verzögerung führt und somit nur spätere Peak- Positionen PP, d.h. im Signaldiagramm weiter rechts, eingenommen werden. Bei Messungen mit Frequenzmodulation, bei denen somit die Peak- Positionen PP für Frequenzwerte stehen, treten noch weitere Effekte auf, z.B. auch Verbreiterungen bzw. Verschiebungen durch die Bewegung der Material-Partikel 11 in der optischen Achse A, die somit durch den Dopplereffekt auch eine Frequenzverschiebung bewirken kann , die sich mit der Frequenzmodulation des Signals überlagert, so dass eine Verbreitung des Reflektorpeaks X erfolgt, die gemäß Figur 7d) und Figur 7f) in dem Signaldiagramm auch zu früheren Werten, d.h. Peak-Position PP bei kleineren Frequenzwerten führen können. Unabhängig von den genauen Effekten, die zu der Peakverbreiterung durch Materialpartikel 11 führen, ergibt sich bei einer höheren Anzahl von Materialpartikeln 11 eine zunehmende Varianz Var. Hierbei kann nicht nur eine höhere Materialdichte, sondern insbesondere bei Frequenzmodulation bereits auch das dynamische Verhalten erfasst werden, da bei einer höheren Geschwindigkeit der Materialpartikel 11 auch die Signalverbreiterungen durch den Dopplereffekt entlang der optischen Achse A zunehmen, da die Materialpartikel 11 in dem Materiestrom 10-1, 10-2 jeweils auch wirbeln bzw. bezüglich ihrer Förderrichtung B Lateralkomponenten aufweisen. Somit kann in die Varianz Var auch die Fördergeschwindigkeit v eingehen. Die Erhöhung der Varianz Var hängt insbesondere auch von Art und Größe der Materialpartikel ab.

Weiterhin kann bei Frequenzmodulation grundsätzlich eine Frequenz- und/oder Phasenauswertung vorgenommen werden.

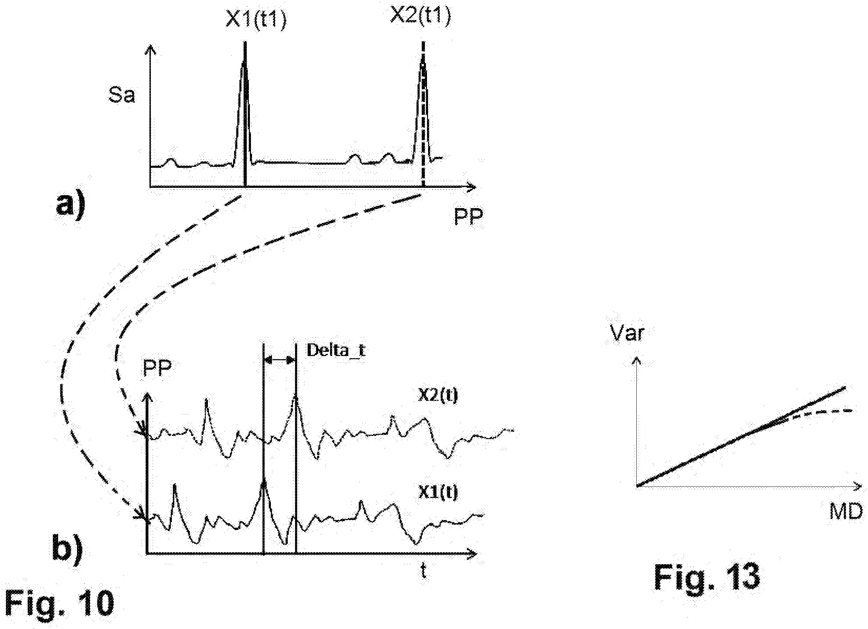

Figur 7g) zeigt wiederum eine mögliche Umrechnung, hier zunächst mit einem einfachen linearen Model. Wie gestrichelt angedeutet, kann insbesondere auch eine Abflachung dieser Umwandlungskurve bei höheren Werten vorliegen, so dass ein höherer Materiedurchsatz MD ggf. nicht zu einer weiteren linearen Erhöhung führt, sondern einen flacheren Kurvenverlauf. Fig. 13 zeigt die Varianz hierzu.

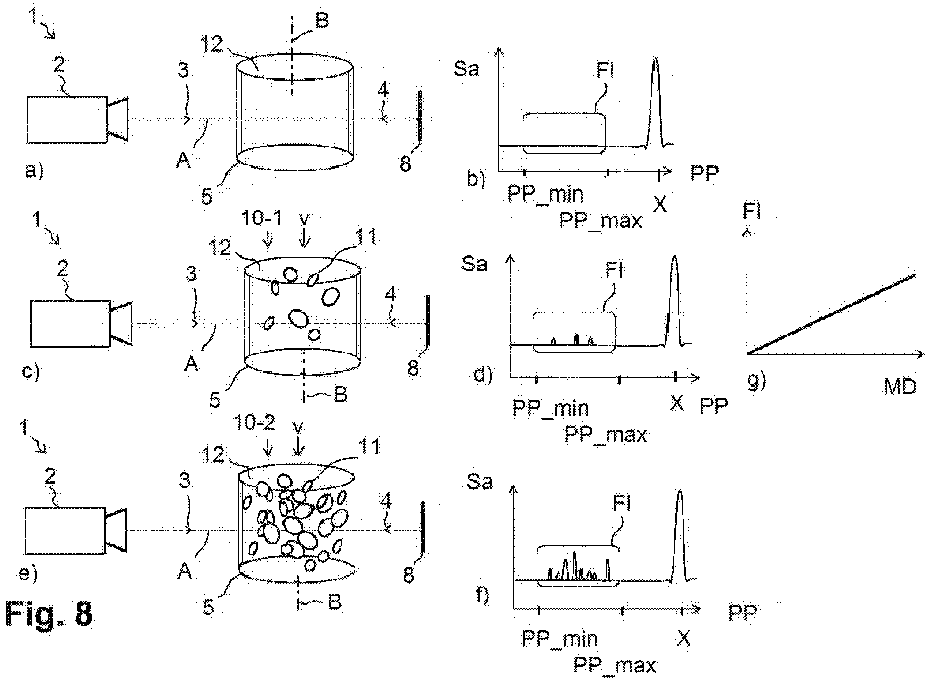

Figur 8 zeigt eine weitere THz-Messvorrichtung 1 und ein Bewertungsverfahren, bei denen eine Streuleistung bzw. eine Korrelation der Streuleistung ermittelt wird. Die einzelnen Figuren bzw. Teil-Figuren der Figur 8 entsprechen denjenigen der Figur 5 bis 7. Hierbei erfolgt eine Auswertung der Signalbeiträge der Materialpartikel 11 in der Signalamplitude Sa, die somit Signalanteile bei Peakpositionen PP vor dem Reflektorpeak X darstellen:

Bei der Kalibriermessung gemäß Figur 8a) mit leerer Führungseinrichtung 5 treten hier zunächst keine Signalbeiträge von Signalpartikel auf; ggf. können wiederum Durchtrittspeaks Y, Z gemäß der obigen Figur 4 beim Durchtritt durch die Wände der Führungseinrichtung 5 vorliegen, die hier nicht betrachtet werden. Es liegt jedoch zunächst keine Reflektion durch Materialpartikel 11 vor.

Gemäß dem kleineren ersten Materiestrom 10-1 der Figur 8c) treten dann Materialpartikel 11 in die optische Achse A, die je nach Ausrichtung den THz-Sendestrahl 3 überwiegend nicht senkrecht zurück entlang der optischen Achse A zurück reflektieren werden; mit einem gewissen statistischen Anteil ist die Eintritts- oder Austrittsfläche eines Materialpartikels 11 jedoch auch zeitweise senkrecht zur optischen Achse A ausgerichtet, so dass hier ein Reflexionsbeitrag erfolgt, der gemäß Figur 8d) in der Signalamplitude Sa zu entsprechenden Beiträgen bzw. Peaks führen kann. Dieser Signalbeitrag bzw. die Streuleistung SL nimmt gemäß dem größeren zweiten Materiestrom 10-2 der Figur 8e) dann zu, wie aus dem Signaldiagramm der Figur 8f) zu entnehmen ist. Hierbei nehmen die Anzahl der Reflektionspeaks, sowie auch deren Höhe/ ggf. Breite zu. Diese Streuleistung SL kann z.B. als Flächenintegral FI erfasst werden, um sowohl Anzahl als auch Höhe der Reflexionspeaks zu erfassen, wobei in die Anzahl der Reflexionspeaks die Anzahl der senkrecht zur optischen Achse A ausgerichteten Eintritts- bzw. Austrittsflächen der Materialpartikel 11 eingehen und in die Höhe insbesondere auch die laterale Ausdehnung des Bereichs der Eintritts- oder Austrittsfläche, der zeitweise senkrecht zu optischen Achse A ausgerichtet ist. Auch andere Bewertungen als ein Flächenintegral FI sind möglich, um diesen Signalbeitrag als Streuleistung zu erfassen.

Das Flächenintegral kann insbesondere relativ zu der Peakposition des Reflektor-Peaks X definiert werden, z.B. als Integral der Signalamplitude Sa in einem Signalabschnitt der Peakpositionen PP_min bis PP_max, die relativ zu der Peakposition von X festgelegt sind.

Figur 8g) zeigt wiederum eine mögliche Umrechnung der Streuleistung, z.B. des Flächenintegrals FI in den Materiedurchsatz MD, hier zunächst mit dem Ansatz eine linearen Zusammenhangs zwischen dem Flächenintegral FI und dem Materiedurchsatz MD, wobei hier auch detaillierte Betrachtungen vorgenommen werden können. Insbesondere hilft wiederum eine kalibrierte Messung bzw. Abstimmung mit anderen Messverfahren.

Diese verschiedenen Verfahren gemäß Figur 5 bis 8 ermöglichen zunächst voneinander unabhängige Bewertungen bzw. Verfahren zur Auswertung, die insbesondere miteinander kombiniert werden können. Diese Kombination kann insbesondere auch dazu dienen, um die Umrechnungskurven gemäß der Figuren 5 e), 6e), 7e), 8 e) zu kalibrieren bzw. abzustimmen.

Die Figuren 9 bis 11 zeigen beispielhaft Ausführungsformen bzw. Verfahren zur Bewertung eines Materiestroms, bei denen eine Messvorrichtung zur Bewertung an zwei Messpositionen, wie sie im Prinzip in Fig. 1 bis 4 beschrieben ist, mit Messprinzipien nach Fig. 5 bis 8 kombiniert wird, um insbesondere einen Materiedurchsatz MD zu erfassen und/oder weitere Informationen über einen Materiestrom zu erhalten.

Figur 9 zeigt eine Messvorrichtung bzw. ein Verfahren zur Bewertung eines Materiestroms, bei dem das bereits oben in Figur 5 gezeigte Messprinzip der Korrelation der Permittivität, d. h. die zeitliche Verschiebung der Peakposition von definierten Reflexionspeaks, insbesondere dem Reflexions-peak X des Reflektor-Spiegels 8, an zwei Messpositionen eingesetzt wird, indem Teilstrahlen gemäß Fig. 1-4 ausgekoppelt werden. Fig. 9 zeigt hier beispielhaft die THz-Messvorrichtung 1 aus Figur 1; es können auch z. B. die THz-Messvorrichtungen 1 aus Figur 2 oder 3 eingesetzt werden; weiterhin können auch Teilstrahlen für mehr als zwei Messpositionen MP1, MP2 ausgekoppelt werden.

Gemäß Figur 9 liefert somit wiederum zunächst die in a) gezeigte Kalibriermessung die in dem Signaldiagramm b) gezeigte Signalamplitude Sa in Abhängigkeit der Peak-Positionen PP, d. h. insbesondere Zeit oder Frequenz.

Gemäß der Kalibriermessung der Figur 9a) ergibt sich somit in dem ersten Signalbereich SB1 der Reflektor-Peak X1 durch die Reflexion an dem ersten Reflektor-Spiegel 8 und entsprechend 9 in dem Signalbereich SB2 der zweite Reflektor-Peak X2 durch die Reflexion an dem zweiten Reflektor-Spiegel 9. Diese Kalibriermessung kann somit zu einem Zeitpunkt t1 aufgenommen und gespeichert werden. Nachfolgend wird gemäß c) ein Materiestrom 10 durch die Führungseinrichtung 5 geleitet, so dass sich gemäß dem oben mit Bezug zu Figur 5 gezeigten Messprinzip Pulsverschiebungen im Signaldiagramm Sa ergeben. Gemäß Figur 9c), d) wird die Pulsverschiebung (zeitliche Verzögerung) D1, D2 durch die unterschiedliche Permittivität des Materiestroms 10 an zwei Stellen, hier der Messposition MP1 der ersten optischen Messachse A1 und der Messposition MP2 der zweiten optischen Messachse A2 ermittelt, wobei die Messpositionen MP1, MP2 entsprechend um den Vertikalabstand d versetzt sind. In der Teilfigur d) ist die Kalibriermessung aus b) erneut eingezeichnet, und gestrichelt die aktuellen Messungen zum Zeitpunkt t2. Abhängig vom Material an den Messpositionen MP1 und MP2 ergibt sich somit eine Pulsverschiebung D1, D2, d. h. Änderung (Erhöhung) der Peak-Positionen der Reflexionspeaks X1, X2. Somit kann nach Fig. 9 bereits eine Materialmenge in dem optischen Pfad DD an beiden Messpositionen MP1, MP2 abgeschätzt werden. Dies dient bereits einer quantitativen Erfassung; weiterhin können transportierte bzw. fallende Materialbereiche "wiedererkannt" werden, wie nachfolgend mit Bezug zu Fig. 10 beschrieben.

Figur 10 beschreibt die Vermessung des Materiestroms 10 in der Führungseinrichtung 5 an den Messpositionen MP1 und MP2 gemäß Fig. 9, wobei Fig. 10a) als einzelne Messung z.B. bei der Leermessung von Fig. 9a) aufgenommen wird und Fig. 10b) bei der dynamischen Messung von Fig. 9c) mit Materiestrom. Im Diagramm der Figur 10b) ist die Peak-Position PP der Reflektor-Peaks X1 und X2 aus Figur 10a) in Abhängigkeit der Zeit t eingezeichnet. Es wird somit zu jedem Zeitpunkt t, z. B. im Abstand von Millisekunden, die Peakposition PP von X1 und X2 eingezeichnet, wie durch die gestrichelten Pfeile zwischen den Figuren b) und d) angedeutet, sodass sich eine untere Kurve PP-X1(t) ergibt, die die Werte PP des ersten Reflektorpeaks X1 aus Fig. 10a) wiedergibt,
und eine obere Kurve PP-X2(t), die die Werte PP des zweiten Reflektorpeaks X2 aus Figur 10a) wiedergibt. Die beiden Kurven in Fig. 10b) geben somit das zeitliche Verhalten der Signalverzögerung bzw. Pulsverschiebung D1 bzw. D2 in Fig. 9d) wieder. Da der Materiedurchsatz durch die Material-Partikel 11 an der ersten optischen Teilachse A1 und zweiten optischen Teilachse A2 nachfolgend ungleichmäßig erfolgt, sind die zeitlichen Änderungen der

Peak-Positionen PP in den beiden Kurven unterschiedlich. Wenn z. B. in der ersten optischen Teilachse A1 eine große Materialmenge, z. B. mehrere oder mehrere dicke Materialpartikel 11 durch den ersten THz-Sendestrahl 3-1 gelangen, tritt hier eine stärkere Pulsverschiebung (Laufzeit-Verschiebung), d. h. eine Erhöhung der Peak-Positionen PP auf, die in der zweiten optischen Messachse A2 zu diesem Zeitpunkt t im Allgemeinen nicht auftreten wird.

Es zeigt sich jedoch, dass die Materialpartikel 11 oder Ansammlungen von Materialpartikeln 11 in den Messpositionen MP1 und MP2, d. h. entsprechend in den Signalbereichen SB1 und SB2, jeweils wiedererkannt bzw. identifiziert werden können, insbesondere wenn die optischen Messachsen A1, A2 hier z.B. an der Führungseinrichtung 5 entlang der Förderrichtung B genau vertikal übereinander und parallel zueinander angeordnet sind. Die Signalkurven PP-X1(t) und PP-X2(t) als Funktion der Zeit t sind daher grundsätzlich ähnlich. In Figur 10b) werden somit Kurvenbereiche der Kurve PP-X2(t) und PP-X1(t) wiedererkannt, die z. B. von großen Flocken oder großen Körnern eines Granulats herrühren können. Somit kann hier eine Material-Transportzeit Delta_t ermittelt werden, die den Materialtransport zwischen der ersten Messposition MP1 und der zweiten Messposition MP2 anzeigt.

Diese Wiedererkennung von Kurvenbereichen kann als Autokorrelation durchgeführt werden, wobei entsprechende Autokorrelationsfunktionen (bzw. Kreuzkorrelation) oder Mustererkennungen oder Kurvenerkennungen als solche in der Signalauswertung bekannt sind. Da die Material-Partikel 11 sich in dem Transport zwischen den Messpositionen MP1, MP2 auch ändern, z.B. durch Turbulenzen im Materiestrom 11 und Eigenrotation der Material-Partikel 11, stimmen die Kurven von X1 und X2 in Figur 10b) nicht exakt überein, die sich entsprechenden Bereiche können jedoch durch geeignete Korrelationsverfahren erkannt werden.

Somit kann eine Material-Transportgeschwindigkeit v aus dem Signaldiagramm ermittelt werden, die insbesondere auch mit anderen Messsignalen oder ermittelten Parametern verglichen werden kann, z. B. einer von der Transporteinrichtung eingestellten Fördergeschwindigkeit des Materiestroms oder Materieguts. Gemäß Figur 10 kann somit die Material-Transportgeschwindigkeit v der Anordnung aus Fig. 9c) ermittelt werden z.B. aus v = d/Delta_t., wenn angesetzt wird, dass die optischen Mess-Achsen A1, A2 parallel und untereinander angeordnet sind und somit der Abstand d der Messpositionen MP1, MP2 von den Materialpartikeln 11 in der Material-Transportzeit Delta_t in der Führungseinrichtung zurückgelegt wird.

Bei z. B. einer horizontal verlaufenden Führungseinrichtung 5 sind entsprechend die optischen Messachsen A1 und A2 horizontal entlang der Förderrichtung B zueinander versetzt anzuordnen, um jeweils entsprechende Bereiche der Führungseinrichtung 5 zu erfassen, wodurch die Möglichkeit der Wiedererkennung der Material-Partikel 11 erhöht werden kann.

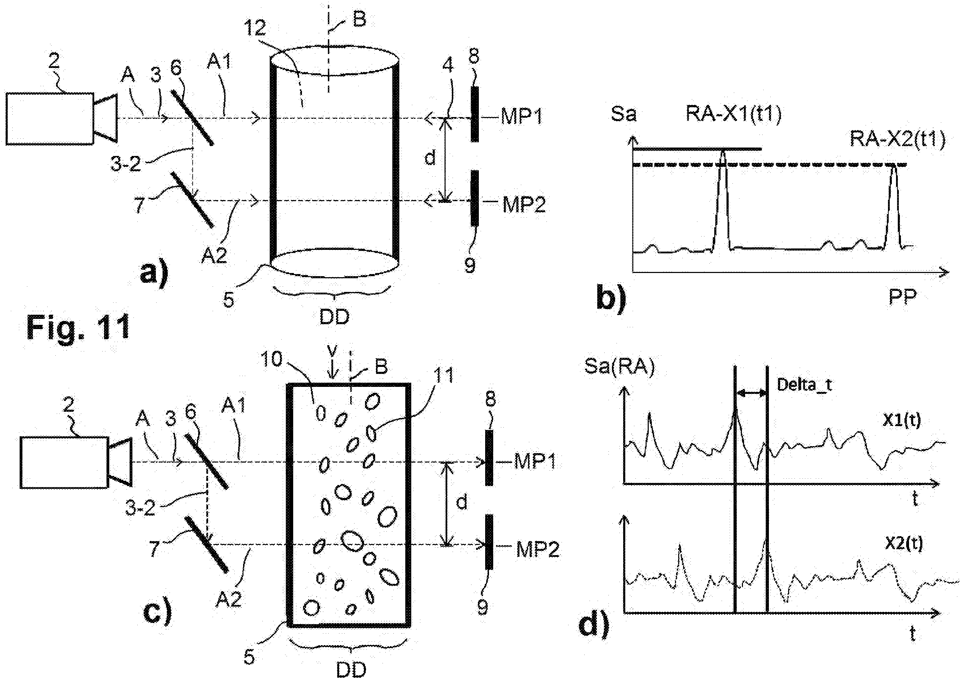

Figur 11 zeigt eine weitere Ausführungsform mit einer Erfassung der Material- Transportgeschwindigkeit v durch Autokorrelation, wobei hier eine Autokorrelation der Amplitudenverläufe erfolgt, d.h. der Abschwächung der Referenzamplitude RA gemäß dem Messprinzip der Fig. 6. Figur 11a), b) zeigt wiederum eine Kalibriermessung und ein Signaldiagramm Sa an zwei Messpositionen MP1, MP2 gemäß den obigen Ausführungen zu Figur 1 bis 4. In Fig. 11b) wird nunmehr die Höhe der Referenzamplitude RA des ersten Reflektor-Peaks X1 der Reflexion am ersten Reflektor-Spiegel 8 im ersten Signalbereich SB1 angezeigt, und entsprechend gestrichelt eingezeichnet die Höhe der Referenzamplitude RA des zweiten Reflektor-Peaks X2 der Reflexion am zweiten Reflektor-Spiegel 9 im zweiten Signalbereich SB2.

Nachfolgend wird gemäß Figur 11c) wiederum an den beiden Messpositionen MP1 und MP2 ein Materiestrom 10 aus einzelnen Material-Partikeln 11 erfasst, die als solche diskret sind und somit wiederum zu Änderungen in er Signalamplitude Sa führen. Wie mit Bezug zu Fig. 6 erläutert werden die Referenzamplitude RA der Reflektorpeaks X1, X2 durch die Absorption durch das Material geschwächt, insbesondere durch Streuung an den Material-Partikeln 11 und Absorption des Materials selbst.

Gemäß Figur 11d) werden die so ermittelten Werte der beiden Referenzamplituden RA-X1(t) und RA-X2(t) in Abhängigkeit der Zeit t aufgetragen, z. B. jeweils ein Messwert pro Millisekunde. Der Materialdurchtritt durch die optischen Messachsen A1 und A2 führt zu charakteristischen Kurvenverläufen, wobei auch hier wiederum der Durchtritt von Materialpartikeln 11 an den Messpositionen MP1, MP2 im Signaldiagramm wiedererkannt werden kann. In Figur 11d) kann durch Autokorrelation des Messignals, d. h. der hier eingezeichneten Kurven RA-X2(t) und RA-X1(t), somit der Durchtritt entsprechender Material-Ansammlungen durch die optischen Messachsen A1 und A2 wiedererkannt werden, insbesondere wiederum mit einem Algorithmus zur Autokorrelation bzw. Mustererkennung oder Kurvenerkennung. Somit kann auch hier wiederum eine Material-Transportzeit Delta_t ermittelt werden, die die Zeitdauer des Materialtransports zwischen den Messpositionen MP1 und MP2 wiedergibt, so dass wiederum entsprechend Figur 10 eine Transportgeschwindigkeit v ermittelt werden kann z.B. aus v = d/Delta_t.

Die so ermittelten Materialtransport-Geschwindigkeiten v gemäß Figur 10 und 11 können verglichen bzw. miteinander korrigiert oder gemittelt werden. So können insbesondere auch erkennbare Ausschläge einer der Messkurven, die auf einen momentanen Messfehler oder Messungenauigkeit zurückzuführen sind, korrigiert werden.

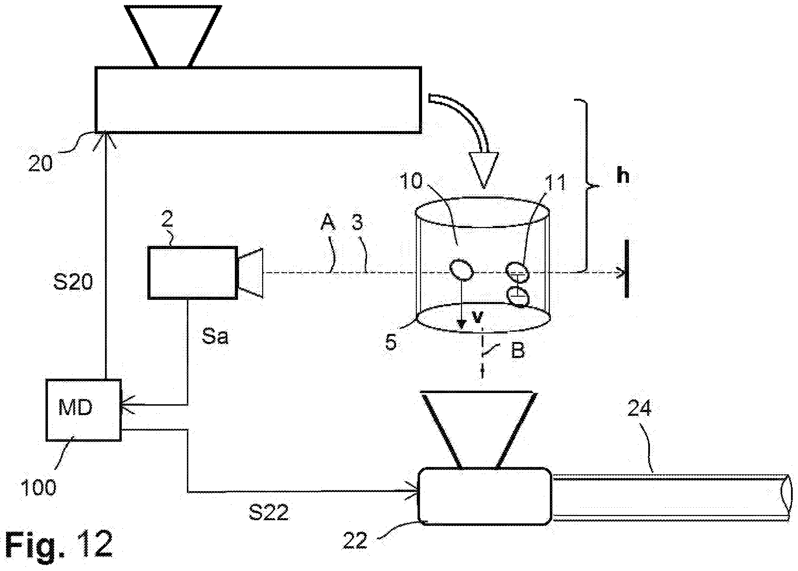

Figur 12 zeigt eine entsprechende Anordnung mit einer Zuführeinrichtung 20, die ein Material fördert und als Materiestrom 10 durch die Förderungseinrichtung 5 leitet, hier z. B. bei vertikalem Verlauf, aber grundsätzlich auch in einem horizontalen oder anders gerichteten Verlauf. Bei der eingezeichneten Förderung fällt somit das Material eine Fallhöhe h in einer Fallzeit t, entsprechend mit einer Geschwindigkeit v. Wie in Figur 12 weiterhin eingezeichnet, kann der Materiestrom 10 nachfolgend von einer Produktionseinrichtung 22, hier einem Extruder 22 aufgenommen werden, um somit ein Produktionsobjekt 24 zu extrudieren. Durch die erfindungsgemäße THz-Messvorrichtung 1 kann hierbei der Materiestrom 10 sehr genau eingestellt werden, insbesondere können auch bei einer Zuführung mehrerer unterschiedlicher Komponenten die mehreren Materialströme unabhängig voneinander vermessen und eingestellt werden.

Diese Vermessungen können somit ergänzend oder alternativ zu einer Gravimetrie/ Volumetrie durchgeführt werden, bei der ein Materiestrom eines festen, insbesondere pulverförmigen oder körnigen Produktes, gravimetrisch beim Durchlaufen über eine Waage erfasst wird oder rein gesteuert ohne Sensorik gefördert wird. Die Erfassung des Materiestroms kann generell an beliebiger Position im Prozess erfolgen, so dass hier eine Durchsatzerfassung mittels THz-Sensorik kombiniert oder einzeln z.B. bereits im Bereich der Materie-Ansaugung oder auch im Bereich der Materie-Förderung zum Produktionsprozess, innerhalb einer Dosierung oder Gravimetrie-/Volumetrie-Einheit, bei der Zuführung z.B. zum Extruder oder einem Verarbeitungsgerät oder auch innerhalb dieses erfolgen kann.

Die genaue Einstellung der Materiezufuhr pro Zeiteinheit, z.B. in kg pro Stunde, ist insbesondere bei der Produktion von Extrusionsobjekten wichtig, um
- z. B. die Wanddicke von Kunststoffrohren, die extrudiert werden, genau einzustellen, und
- die Zusammensetzung aus mehreren Komponenten genau einzustellen. Durch die erfindungsgemäße THz-Messvorrichtung kann somit insbesondere auch eine Regelung mit einer Steuereinrichtung 100 geschaffen werden, die die das erfindungsgemäße THz-Messverfahren bzw. den THz-Sensor 1 und die so erzeugten Bewertungssignale zur Einstellung der Fördereinrichtung 20 verwendet, d. h. eine Regelung der Förderleistung der Zuführeinrichtung 20 über Förderleistungs-Steuersignale S20 und/oder Extruder-Steuersignale S22 zur Einstellung der Extrudiergeschwindigkeit, um entsprechend dem Materiedurchsatz MD eine oder mehrere Komponenten einzustellen, und/oder eine Änderung der Abzugsgeschwindigkeit des extrudierten Objektes..

Bei Zufuhr mehrerer Komponenten sind somit insbesondere mehrere Fördereinrichtungen 5 vorgesehen, die gemeinsam Ausgangsmaterialien jeweils als Materiestrom 10 zu dem Extruder 22 zuführen.

### Bezugszeichenliste

- 1: THz-Messvorrichtung
- 2: THz-Sensor
- 3: THz-Sendestrahl
- 3-1: erster THZ-Sende-Teilstrahl
- 3-2: zweiter THz-Sende-Teilstrahl, Auskoppelstrahl
- 4: THz-Reflexionsstrahl
- 4-1: erster THz-Reflexions-Teilstrahl
- 5: Materiestrom-Führungseinrichtung, z.B. Kunststoff-Rohr
- 6: halbdurchlässiger Spiegel
- 7, 7a, 7b: Umlenkspiegel
- 8: erster Reflektor-Spiegel
- 9: zweiter Reflektor-Spiegel
- 10: Materiestrom
- 10-0, 10-1, 10-2: verschiedene Materialströme
- 11: Materialpartikel
- 12: Messraum
- 20: Zuführeinrichtung
- 22: Produktionseinrichtung, Extruder 22
- 24: Produktionsobjekt
- 100: Steuer- und Auswerteeinrichtung
- A: optische Achse
- A1: erste optische Messachse
- A2: zweite optische Messachse
- B: Förderrichtung und/oder Längsachse der Materiestrom-Führungseinrichtung 5
- d: Abstand der Messpositionen oder Messebenen in Förderrichtung und/oder Längsachse der Materiestrom-Führungseinrichtung
- DD: Pfad im Messraum, d.h. geometrische Wegstrecke in der Führungseinrichtung 5, entlang der optischen Achse A, A1, A2
- D1: zeitliche Signalverzögerung, Peakverschiebung des Reflektorpeaks X
- MD: Materiedurchsatz, z.B. in kg/Stunde
- MP1, MP2: Messpositionen, Messebenen
- PP: Peakpositionen in Signaldiagramm, z.B. Zeitwerte bei direkter Laufzeitmessung oder Frequenzwerte bei Frequenzmodulation
- (PP_min; PP_max): Signalabschnitt in Signaldiagramm
- RA-X1(t), RA-X2(t): Referenzamplituden
- S20: Förderleistungs-Steuersignale
- S22: Extruder-Steuersignale
- Sa: Signalamplitude
- SB1: erster Signalbereich im Mess-Signal
- SB2: zweiter Signalbereich im Mess-Signal
- t, t1, t2: Zeit, verschiedene Zeitpunkte der Messungen
- X1, X2: Reflexionspeaks der Reflektor-Spiegel 8, 9
- Y1, Y2: erste Durchtrittspeaks bei Durchtritt durch Führungseinrichtung 5
- Z1, Z2: zweite Durchtrittspeaks bei Durchtritt durch Führungseinrichtung 5

## Patentansprüche

1. Verfahren zum Erfassen eines Materiestroms (10, 10-1, 10-2) mittels einer Laufzeitmessung, mit den Schritten:
- Erzeugen eines THz-Sendestrahls (3) durch einen THz-Sensor (2),
- Führen des THz-Sendestrahls (3, 3-1, 3-2) durch einen Materiestrom (10) entlang mindestens einer ersten optischen Achse (A1),
- Reflektieren des durch den Materiestrom (10) getretenen THz- Sendestrahls (3, 3-1, 3-2) durch mindestens einen Reflektor-Spiegel (8, 9)
- Detektieren des reflektierten THz-Reflexionsstrahls (4) und Erzeugen einer Signalamplitude (Sa),
- Ermitteln eines dem Reflektor-Spiegel entsprechenden Reflektor-Peaks (X, X1, X2) in der Signalamplitude (Sa),
- Bewertung des ermittelten Reflektor-Peaks (X, X1, X2) in einem Bewertungsschritt und Ermittlung von Materialeigenschaften des Materiestroms (10) in Abhängigkeit des Bewertungsschrittes.

2. Verfahren nach Anspruch 1, **dadurch gekennzeichnet, dass**
- zunächst eine Kalibriermessung einer Führungseinrichtung (5) ohne Materiestrom (10) durchgeführt wird, unter Speicherung der Signalamplitude (Sa) und/oder eines ermittelten Reflektor-Peaks (X, X1, X2) der Signalamplitude (Sa), und
nachfolgend der Materiestrom (10) durch die Führungseinrichtung (5) geleitet wird und die Signalamplitude (Sa) erfasst wird, und Unterschiede der Signalamplitude (Sa) der Kalibriermessung und der nachfolgenden Messung bei dem Materiestrom (10) ermittelt werden, zur Bewertung der Materialeigenschaften des Materiestroms (10).

3. Verfahren nach Anspruch 2, **dadurch gekennzeichnet, dass** bei der Kalibriermessung weiterhin eine Zeitposition, eine Frequenz und/oder eine Phase des ermittelten Reflektor-Peaks (X, X1, X2) der Signalamplitude (Sa) gespeichert wird.

4. Verfahren nach einem der vorherigen Ansprüche, **dadurch gekennzeichnet, dass**
eine Signaleigenschaft (PP; RA, Var) des Reflektor-Peaks (X, X1, X2) und/oder eines durch den Reflektor-Peak definierten Signalabschnitts (PP_min; PP_max) in der Signalamplitude (Sa) ermittelt und nachfolgend bewertet wird, insbesondere als relativer Vergleich zu einer Kalibriermessung und/oder als relativer Vergleich an unterschiedlichen Messpositionen (MP1, MP2) entlang einer Förderrichtung (B) des Materiestroms (10) oder der Führungseinrichtung (5).

5. Verfahren nach Anspruch 4, **dadurch gekennzeichnet, dass** als Signaleigenschaft (PP; RA, Var) des Reflektor-Peaks (X, X1, X2) ermittelt wird:
- eine Peakposition (PP) des Reflektor-Peaks (X, X1, X2) und/oder
- eine Frequenz und/oder Phase des ermittelten Reflektor-Peaks (X, X1, X2) der Signalamplitude (Sa) und/oder
- eine Amplitudenhöhe als Referenzamplitude (RA) des Reflektor-Peaks (X, X1, X2) und/oder
- eine Peakbreite (Var) des Reflektor-Peaks (X, X1, X2) und/oder
- ein vor dem Reflektor-Peak auftretender Signalabschnitt (PP_min; PP_max) mit Streureflektionen.

6. Verfahren nach Anspruch 5, **dadurch gekennzeichnet, dass** bei mehreren Messungen, z. B. einer Kalibriermessung und nachfolgenden Messung des Materiestroms (10), und/oder bei mehreren Messungen des Materiestroms (10) an mehreren Messpositionen (MP1, MP2)
eine Änderung der Signaleigenschaft (PP; RA, Var) des Reflektor-Peaks (X, X1, X2) ermittelt wird.

7. Verfahren nach Anspruch 5 oder 6, **dadurch gekennzeichnet, dass** in dem Bewertungsschritt eine zeitliche Änderung der Peakposition (PP) des Reflektor-Peaks (X, X1, X2) als Änderung der Permittivität ermittelt wird,
insbesondere als Laufzeit-Verschiebung durch Änderung der Lichtgeschwindigkeit (c10) oder des Brechungsindex (n) des Materiestroms (10).

8. Verfahren nach einem der Ansprüche 5 bis 7, **dadurch gekennzeichnet, dass**
in dem Bewertungsschritt eine Änderung der als Referenzamplitude (RA) ermittelten Signalamplitude (Sa) des Reflektor-Peaks (X, X1, X2) ermittelt wird und die Änderung der Referenzamplitude (RA) bewertet wird als Änderung des Materiedurchsatzes (MD) in der Führungseinrichtung (5) in dem optischen Pfad (DD) in der Führungseinrichtung (5),
wobei eine Verringerung der Referenzamplitude (RA) bewertet wird als Erhöhung der Absorption und/oder Streuung durch den Materiestrom (10).

9. Verfahren nach einem der Ansprüche 5 bis 8, **dadurch gekennzeichnet, dass**
in dem Bewertungsschritt eine Änderung einer Peakbreite (Var), z.B. der Varianz (Var) des Reflektor-Peaks (X, X1, X2) erfasst wird und eine Vergrößerung der Peakbreite (Var) bewertet wird als Änderung des Materiestroms (10), insbesondere Erhöhung des Materiestroms (10),
wobei ein Peakbreite über eine Einzelmessung, z.B. als Halbwertsbreite, und/oder über stochastische Auswertung mehrerer Messungen, z.B. als Varianz, ermittelt wird.

10. Verfahren nach einem der Ansprüche 5 bis 9, **dadurch gekennzeichnet, dass**
in dem Bewertungsschritt eine Änderung von Beiträgen der Signalamplitude (Sa) in einem vor dem Reflektor-Peak (X) liegenden Signalabschnitt (PP_min; PP_max) bewertet wird, insbesondere eine Änderung eines Integrals, z.B. Flächenintegrals (FI) der Signalamplitude (Sa) über die Pixelpositionen (PP),
wobei die Beiträge der Signalamplitude (Sa) als Streureflektionen, insbesondere Streuleistung an Material-Partikeln (11) bewertet werden, wobei eine Erhöhung der Beiträgen der Signalamplitude (Sa), insbesondere des Flächenintegrals (FI), als Erhöhung der Materiedichte oder des Materiedurchsatzes (MD) bewertet wird.

11. Verfahren nach einem der Ansprüche 5 bis 10, **dadurch gekennzeichnet, dass**
in dem Bewertungsschritt zeitliche Änderungen oder ein zeitliches Verhalten der Signaleigenschaft (PP; RA, Var) des Reflektor-Peaks (X, X1, X2) als signifikante Struktur (SS) bewertet wird, insbesondere signifikante Struktur einer Materialansammlung von Materialpartikeln (11) in dem optischen Pfad (DD) der optischen MessAchse (A, A1, A2),
und durch Messung an mehreren, in einer Transportrichtung (B) oder Förderrichtung aufeinanderfolgenden Mess-Positionen und Vergleich der zeitlichen Änderungen oder des zeitlichen Verhaltens der Signaleigenschaft (PP; RA, Var) die signifikante Struktur (SS) in dem zeitliches Verhalten der Signaleigenschaft (PP; RA, Var) wiedererkannt wird, und
eine Material-Transportzeit (Delta_t) zwischen den Mess-Positionen (MP1, MP2) und/oder eine Material- Transportgeschwindigkeit (v) zwischen den Mess-Positionen (MP1, MP2) und/oder ein Materiedurchsatz (MD) ermittelt wird.

12. Verfahren nach einem der Ansprüche 5 bis 11, **dadurch gekennzeichnet, dass**
in dem Bewertungsschritt eine Korrelation oder Autokorrelation der Signalamplitude und/oder der aus der Signalamplitude ermittelten Signaleigenschaft (PP; RA, Var) ermittelt wird, zur Ermittlung einer Material-Transportzeit (Delta_t) zwischen den Messpositionen.

13. Verfahren nach einem der vorherigen Ansprüche, **dadurch gekennzeichnet, dass** aus dem THz-Sendestrahl (3) mehrere optische Teil-Sendestrahlen (3-1, 3-2) ausgekoppelt werden, z. B. mittels eines teildurchlässigen Spiegels (6, 6a),
wobei die Teil-Sendestrahlen (3-1, 3-2) an unterschiedlichen Messpositionen (MP1, MP2) durch den Materiestrom (19 und/oder durch die Führungseinrichtung (5) geführt und nachfolgend an den Messpositionen (MP1, MP2) als Reflektions- THz-Teilstrahlen zurück reflektiert werden,
die Reflektions-THz-Teilstrahlen zusammengeführt werden durch Einkopplung auf die gemeinsame optische Achse (A) als gemeinsamer THz-Reflektionstrahl (4), der durch den THz-Sensor (2) detektiert wird, nachfolgend in dem Bewertungsschritt in der Signalamplitude (Sa) mehrere Signalbereiche (SB1, SB2), die den Messpositionen (MP1, MP2) entsprechen, ermittelt und bewertet werden

14. Verfahren nach Anspruch 13, **dadurch gekennzeichnet, dass** die Material- Transportgeschwindigkeit (v) ermittelt wird aus einem Messpositions-Abstand (d) und einer ermittelten Material-Transportzeit (Delta-t) zwischen den Messpositionen (MP1, MP2).

15. THz-Messvorrichtung (1) zur Erfassung eines Materiestroms (10) mittels einer Laufzeitmessung, die aufweist:
mindestens einen Reflektor-Spiegel (8, 9) zum zumindest teilweise Reflektieren von THz-Strahlung,
einen THz-Sensor (2) zum Aussenden eines THz-Sendestrahls (3) entlang einer optischen Achse (A) und Empfang eines durch den mindestens einen Reflektor-Spiegel (8, 9) reflektieren THz- Reflektionsstrahls (4) entlang der optischen Achse (A), und Ausgabe einer Signalamplitude (Sa)
eine Steuer- und Auswerteeinrichtung (100), die eingerichtet ist zum Aufnehmen der Signalamplitude (Sa) des THz-Sensors (2) und Ermitteln von Materialeigenschaften eines zwischen dem THz-Sensor (2) und dem Reflektor-Spiegel (8, 9) geführten Materiestroms (10).aus einem Vergleich mehrere Messungen und/oder einem zeitlichen Verhalten der Signalamplitude (Sa)

16. THz-Messvorrichtung (1) nach Anspruch 15, **dadurch gekennzeichnet, dass** sie eine Ein- und Auskoppeleinrichtung (6), z. B. einen halbdurchlässigen Spiegel (6, 6a) aufweist, der den THz-Sendestrahl (3) unterteilt in einen ersten THz-Sende-Teilstrahl (3-1) und einen zweiten THz-Send-Teilstrahl (3-2), und zum Einkoppeln der reflektierten Teilstrahlen auf die gemeinsame optische Achse (A) und
mindestens einen Umlenkspiegel (7, 7a, 7b) zum Umlenken mindestens eines der ausgekoppelten Teilstrahlen auf eine zweite Messposition (MP1),
sodass die beiden THz-Sende-Teilstrahlen (3-1, 3-2) an unterschiedliche Messpositionen (MP1, MP2) an der Führungseinrichtung (5) positioniert wird und in den Messpositionen jeweils durch mindestens einen Reflektor-Spiegel (8, 9) zurück reflektiert sind.

17. Anordnung aus der THz-Messvorrichtung (1) nach einem der Ansprüche 15 oder 16 und der Führungseinrichtung (5), z. B. einem Kunststoff-rohr zum Führen eines Materiestroms (10, 10-2) mit Material-Partikeln (11) in einem Gas, z. B. Luft.

18. Verfahren zum Herstellen eines Produktionsobjektes (24), insbesondere eines extrudierten Produktionsobjektes, bei dem mindestens ein Material aus Material-Partikeln (11), z.B. ein Granulat oder Pulver, von einer Zuführeinrichtung (2) als Materiestrom (10) zu einer Produktionseinrichtung (22) zugeführt wird,
wobei der Materiestrom (10) mit einem Verfahren nach einem der Ansprüche 1 bis 14 und/oder einer THZ-Messvorrichtung (1) nach einem der Ansprüche 15 bis 16 erfasst wird und ein Materiedurchsatz (MD) des Materiestroms (10) ermittelt wird, und
in Abhängigkeit des ermittelten Materiedurchsatzes (MD) eine Förderleistung der Zuführeinrichtung (20) und/oder Produktionseinstellungen der Produktionseinrichtung (22) eingestellt werden, zur Regelung der Herstellung des Produktionsobjektes (24).

## Claims

1. Method for detecting a material flow (10, 10-1, 10-2) using a time-of-flight measurement, comprising the following steps:
- generating a transmitted THz beam (3) by means of a THz sensor (2),
- guiding the transmitted THz beam (3, 3-1, 3-2) through a material flow (10) along at least one first optical axis (A1),
- reflecting the transmitted THz beam (3, 3-1, 3-2) which has passed through the material flow (10) by means of at least one reflector mirror (8,9)
- detecting the reflected THz reflection beam (4) and generating a signal amplitude (Sa),
- determining a reflector peak (X, X1, X2) in the signal amplitude (Sa) corresponding to the reflector mirror,
- evaluating the determined reflector peak (X, X1, X2) in an evaluating step and determining material properties of the material flow (10) depending on the evaluating step.

2. Method according to claim 1, **characterised in that**
- first a calibration measurement of a guiding device (5) without any material flow (10) is carried out, while storing the signal amplitude (Sa) and/or a determined reflector peak (X, X1, X2) of the signal amplitude (Sa), and
subsequently the material flow (10) is guided through the guiding device (5) and the signal amplitude (Sa) is detected, and
differences of the signal amplitude (Sa) of the calibration measurement and the subsequent measurement with the material flow (10) are determined, for evaluating the material properties of the material flow (10).

3. Method according to claim 2, **characterised in that** upon carrying out the calibration measurement, in addition, a temporal position, a frequency and/or a phase of the determined reflector peak (X, X1, X2) of the signal amplitude (Sa) is stored.

4. Method according to one of the above claims, **characterised in that** a signal property (PP; RA, Var) of the reflector peak (X, X1, X2) and/or of a signal segment (PP_min; PP_max) in the signal amplitude (Sa) defined by the reflector peak is determined and subsequently evaluated, in particular as a relative comparison with a calibration measurement and/or as a relative comparison at different measuring positions (MP1, MP2) along a transport direction (B) of the material flow (10) or of the guiding device (5).

5. Method according to claim 4, **characterised in that** the following is determined as signal property (PP; RA, Var) of the reflector peak (X, X1, X2):
- a peak position (PP) of the reflector peak (X, X1, X2) and/or
- a frequency and/or phase of the determined reflector peak (X, X1, X2) of the signal amplitude (Sa) and/or
- an amplitude height as reference amplitude (RA) of the reflector peak (X, X1, X2) and/or
- a peak width (Var) of the reflector peak (X, X1, X2) and/or
- a signal segment (PP_min; PP_max) with scatter reflections appearing before the reflector peak.

6. Method according to claim 5, **characterised in that** in several measurements, e.g. a calibration measurement and subsequent measurement of the material flow (10), and/or in several measurements of the material flow (10) at several measuring positions (MP1, MP2)
a change of the signal property (PP; RA, Var) of the reflector peak (X, X1, X2) is determined.

7. Method according to claim 5 or 6, **characterised in that**
in the evaluating step a temporal change of the peak position (PP) of the reflector peak (X, X1, X2) is determined as change of the permittivity,
in particular, as time of flight shift caused by a change of the speed of light (c10) or of the refraction index (n) of the material flow (10).

8. Method according to one of the claims 5 through 7, **characterised in that**
in the evaluating step a change of the signal amplitude (Sa) of the reflector peak (X, X1, X2) determined as reference amplitude (RA) is determined and the change of the reference amplitude (RA) is evaluated as a change of the material throughput (MD) in the guiding device (5) in the optical path (DD) in the guiding device (5),
where a reduction of the reference amplitude (RA) is evaluated as an increase of the absorption and/or scatter by the material flow (10).

9. Method according to one of the claims 5 through 8, **characterised in that**
in the evaluating step a change of a peak width (Var), e.g. the variance (Var) of the reflector peak (X, X1, X2), is collected, and an increase of the peak width (Var) is evaluated as a change of the material flow (10), in particular increase of the material flow (10),
where a peak width is determined by a single measurement, e.g. as peak width at half-height, and/or by means of a stochastic evaluation of several measurements, e.g. as a variance.

10. Method according to one of the claims 5 through 9, **characterised in that**
in the evaluating step a change of components of the signal amplitude (Sa) in a signal segment (PP_min; PP_max) lying before the reflector peak (X) is evaluated, in particular a change of an integral, e.g. surface integral (FI) of the signal amplitude (Sa) across the pixel positions (PP),
where the components of the signal amplitude (Sa) are evaluated as scatter reflections, in particular spreading capacity at material particles (11),
where an increase of the components of the signal amplitude (Sa), in particular the surface integral (FI), is evaluated as an increase of the material density or the material throughput (MD).

11. Method according to one of the claims 5 through 10, **characterised in that**
in the evaluating step temporal changes or a temporal behavior of the signal property (PP; RA, Var) of the reflector peak (X, X1, X2) is evaluated as a significant structure (SS),
in particular significant structure of a material accumulation of material particles (11) in the optical path (DD) of the optical measuring axis (A, A1, A2),
and, by measurements at several measuring positions, which are successive in a transport direction (B) or direction of conveyance, and comparison of the temporal changes or the temporal behavior of the signal property (PP; RA, Var), the significant structure (SS) is recognized in the temporal behavior of the signal property (PP; RA, Var), and
a material transport time (Delta_t) between the measuring positions (MP1, MP2) and/or a material transport velocity (v) between the measuring positions (MP1, MP2) and/or a material throughput (MD) is determined.

12. Method according to one of the claims 5 through 11, **characterised in that**
in the evaluating step a correlation or auto-correlation of the signal amplitude and/or of the signal property (PP; RA, Var) determined from the signal amplitude is determined, so as to determine a material transport time (Delta_t) between the measuring positions.

13. Method according to one of the above claims, **characterised in that** from the transmitted THz beam (3) several optical transmitted partial beams (3-1, 3-2) are de-coupled, e.g. by means of a semi-permeable mirror (6, 6a),
where the transmitted partial beams (3-1, 3-2) are guided through the material flow (19 and/or through the guiding device (5) at different measuring positions (MP1, MP2) and subsequently reflected back at the measuring positions (MP1, MP2) as reflected partial THz beams, the reflected partial THz beams are combined by coupling onto the common optical axis (A) as a common reflected THz beam (4) which is detected by the THz sensor (2),
subsequently, in the evaluating step several signal ranges (SB1, SB2) in the signal amplitude (Sa), corresponding to the measuring positions (MP1, MP2), are determined and evaluated.

14. Method according to claim 13, **characterised in that** the material transport time (v) is determined from a spacing of the measuring positions (d) and a determined material transport time (Delta-t) between the measuring positions (MP1, MP2).

15. THz measuring device (1) for acquiring a material flow (10) using a
time-of-flight measurement, comprising:
at least one reflector mirror (8, 9) for at least partially reflecting THz radiation,
a THz sensor (2) for emitting a transmitted THz beam (3) along an optical axis (A) and receiving a reflected THz beam (4) reflected by said at least one reflector mirror (8, 9) along the optical axis (A), and putting out a signal amplitude (Sa)
a controller and evaluating unit (100) configured to receive the signal amplitude (Sa) of the THz sensor (2) and determine material properties of a material flows (10) guided between the THz sensor (2) and the reflector mirror (8, 9) from a comparison of several measurements and/or a temporal behavior of the signal amplitude (Sa).

16. THz measuring device (1) according to claim 15, **characterised in that** it comprises a coupling and de-coupling means (6), e.g. a semi-permeable mirror (6, 6a), which splits the transmitted THz beam (3) into a first partial transmitted THz beam (3-1) and a second partial transmitted THz beam (3-2), and for coupling the reflected partial beams onto the common optical axis (A), and
at least one deflection mirror (7, 7a, 7b) for deflecting at least one of the de-coupled partial beams towards a second measuring position (MP1),
so that the two partial transmitted THz beams (3-1, 3-2) are positioned at different measuring positions (MP1, MP2) at the guiding device (5) and are reflected back at the measuring positions each by at least one reflector mirror (8, 9).

17. Arrangement consisting of the THz measuring device (1) according to one of the claims 15 or 16 and the guiding device (5), e.g. a plastic pipe, for guiding a material flow (10, 10-2) comprising material particles (11) in a gas, e.g. air.

18. Method for manufacturing a production object (24), in particular an extruded production object, wherein
at least one material consisting of material particles (11), e.g. a granulate or powder, is fed to a production means (22) by a feeder device (2) as a material flow (10),
wobei where the material flow (10) is acquired using a method according to one of the claims 1 through 14 and/or a THZ-measuring device (1) according to one of the claims 15 through 16, and a material throughput (MD) of the material flow (10) is determined, and depending on the determined material throughput (MD) a transport output of the feeder device (20) and/or production settings of the production means (22) are adjusted, for regulating the manufacturing process of the production object (24).

## Revendications

1. Procédé de détection d'un flux de matière (10, 10-1 , 10-2) moyennant une mesure du temps de transit, le procédé comportant les étapes suivantes :
- générer un rayon émis Thz (3) par un capteur térahertz (2),
- guider le rayon émis THz (3, 3-1, 3-2) à travers un flux de matière (10) le long au moins d'un premier axe optique (A1),
- réfléchir le rayon émis THz (3, 3-1, 3-2) ayant traversé le flux de matière (10) par au moins un miroir réflecteur (8, 9)
- détecter le rayon de réflexion THz (4) réfléchi et générer une amplitude de signal (Sa),
- déterminer un pic de réflecteur (X, X1, X2) dans l'amplitude de signal (Sa) qui correspond au miroir réflecteur,
- évaluer le pic de réflecteur déterminé (X, X1, X2) au cours d'une étape d'évaluation et déterminer des caractéristiques matérielles du flux de matière (10) en fonction de l'étape d'évaluation.

2. Procède suivant la revendication 1, **caractérisé en ce que**
- tout d'abord une mesure de calibrage d'un dispositif de guidage (5) est effectuée sans flux de matière (10) tout en mémorisant l'amplitude de signal (Sa) et/ou un pic de réflecteur déterminé (X, X1, X2) de l'amplitude de signal (Sa), et
ensuite le flux de matière (10) est guidé à travers le dispositif de guidage (5) et l'amplitude de signal (Sa) est détectée et des différences de l'amplitude de signal (Sa) de la mesure de calibrage et de la mesure suivante du flux de matière (10) sont déterminées pour l'évaluation des caractéristiques matérielles du flux de matière (10).

3. Procédé suivant la revendication 2, **caractérisé en ce que** lors de la mesure de calibrage sont mémorisées en plus une position temporelle, une fréquence et/ou une phase du pic de réflecteur déterminé (X, X1, X2) de l'amplitude de signal (Sa).

4. Procédé suivant une des revendications précédentes, **caractérisé en ce qu'**une caractéristique de signal (PP, RA, Var) du pic de réflecteur (X, X1, X2) et/ou une partie de signal définie par le pic de réflecteur (PP_min ; PP_max) dans l'amplitude de signal (Sa) sont déterminées, puis évaluées, en particulier sous la forme d'une comparaison relative avec une mesure de calibrage et/ou sous la forme d'une comparaison relative en différentes positions de mesure (MP1, MP2) le long d'une direction de transit (B) du flux de matière (10) ou du dispositif de guidage (5).

5. Procédé suivant la revendication 4, **caractérisé en ce que** comme caractéristique de signal (PP, RA, Var) du pic de réflecteur (X, X1, X2) sont déterminées :
- une position de pic (PP) du pic de réflecteur (X, X1, X2) et/ou
- une fréquence et/ou phase du pic de réflecteur déterminé (X, X1, X2) de l'amplitude de signal (Sa) et/ou
- une grandeur d'amplitude comme amplitude de référence (RA) du pic de réflecteur (X, X1, X2) et/ou
- une largeur de pic (Var) du pic de réflecteur (X, X1, X2) et/ou
- une partie de signal (PP_min, PP_max) avec des réflexions diffuses qui apparaît avant le pic de réflecteur.

6. Procédé suivant la revendication 5, **caractérisé en ce qu'**en cas de plusieurs mesures, p.ex. une mesure de calibrage et une mesure suivante du flux de matière (10) et/ou en cas de plusieurs mesures du flux de matière (10) en plusieurs positions de mesure (MP1, MP2), une variation de la caractéristique de signal (PP, RA, Var) du pic de réflecteur (X, X1, X2) est déterminée.

7. Procédé suivant la revendication 5 ou 6, **caractérisé en ce qu'**à l'étape d'évaluation une variation temporelle de la position de pic (PP) du pic de réflecteur (X, X1, X2) est déterminée comme variation de la permittivité, en particulier sous forme d'un décalage du temps de transit en raison d'une variation de la vitesse de la lumière (c10) ou de l'indice de réfraction (n) du flux de matière (10).

8. Procédé suivant une des revendications 5 à 7, **caractérisé en ce qu'à** l'étape d'évaluation une variation de l'amplitude de signal (Sa) du pic de réflecteur (X, X1, X2) déterminée comme amplitude de référence (RA) est déterminée et la variation de l'amplitude de référence (RA) est évaluée comme variation du débit de matière (MD) dans le dispositif de guidage (5) dans le trajet optique (DD) dans le dispositif de guidage (5), une réduction de l'amplitude de référence (RA) étant évaluée comme augmentation de l'absorption et/ou dispersion par le flux de matière (10).

9. Procédé suivant une des revendications 5 à 8, **caractérisé en ce qu'à** l'étape d'évaluation une variation d'une largeur de pic (Var), par exemple de la variance (Var) du pic de réflecteur (X, X1, X2), est détectée et une augmentation de la largeur de pic (Var) est évaluée comme variation du flux de matière (10), en particulier comme une augmentation du flux de matière (10), une largeur de pic étant déterminée par l'intermédiaire d'une mesure unique, par exemple sous forme d'une demi-largeur et/ou d'une évaluation stochastique de plusieurs mesures, p.ex. comme variance.

10. Procédé suivant une des revendications 5 à 9, **caractérisé en ce qu'à** l'étape d'évaluation une variation des contributions de l'amplitude de signal (Sa) dans une partie de signal (PP_min ; PP_max) située avant le pic de réflecteur (X) est évaluée, en particulier, une variation d'une intégrale, par exemple, d'une intégrale de surface (FI) de l'amplitude de signal (Sa) par l'intermédiaire des positions de pixels (PP), les contributions de l'amplitude de signal (Sa) étant évaluées comme réflexions diffuses, en particulier comme pouvoir diffusant sur des particules de matière (11), une augmentation des contributions de l'amplitude de signal (Sa), en particulier de l'intégrale de surface (FI), étant évaluée comme augmentation de la densité de matière ou du débit de matière (MD).

11. Procédé suivant une des revendications 5 à 10, **caractérisé en ce qu'à** l'étape d'évaluation des variations temporelles ou un comportement temporel de la caractéristique de signal (PP, RA, Var) du pic de réflecteur (X, X1, X2) sont évalués comme structure significative (SS), en particulier structure significative d'une accumulation de particules matérielles (11) dans le trajet optique (DD) de l'axe de mesure optique (A, A1, A2) et **en ce que** la structure significative (SS) est reconnue dans le comportement temporel de la caractéristique de signal (PP, RA, Var) grâce à des mesures se succédant dans une direction de transport ou de transit B en plusieurs positions de mesure et comparaison des variations temporelles ou du comportement temporel de la caractéristique de signal (PP, RA, Var) et **en ce qu'**un temps de transit de matière (Delta_t) entre les positions de mesure (MP1, MP2) et/ou une vitesse de transit de matière (v) entre les positions de mesure (MP1, MP2) et/ou un débit de matière (MD) sont déterminés.

12. Procédé suivant une des revendications 5 à 11, **caractérisé en ce qu'à** l'étape d'évaluation une corrélation ou une autocorrélation de l'amplitude de signal et/ou de la caractéristique de signal (PP, RA, Var) est déterminée à partir de l'amplitude de signal pour la détermination d'un temps de transit de matière (Delta_t) entre les positions de mesure.

13. Procédé suivant une des revendications précédentes, **caractérisé en ce qu'**à partir du rayon émis THz (3) plusieurs rayons optiques partiels émis (3-1, 3-2) sont découplés, par exemple au moyen d'un miroir translucide (6, 6a), les rayons partiels émis (3-1, 3-2) étant en différentes positions de mesure (MP1, MP2) guidés à travers le flux de matière (19) et/ou à travers le dispositif de guidage (5), puis rétroréfléchis aux positions de mesure (MP1, MP2) sous forme de rayons émis THz partiels, **en ce que** les rayons émis THz partiels sont rassemblés par couplage sur l'axe optique commun (A) sous la forme d'un rayon THz de réflexion commun (4) qui est détecté par le capteur THz (2), puis à l'étape d'évaluation sont déterminées et évaluées plusieurs parties de signal (SB1, SB2) dans l'amplitude de signal (Sa) qui correspondent aux positions de mesure (MP1, MP2).

14. Procédé suivant la revendication 13, **caractérisé en ce que** la vitesse de transit de matière (v) est déterminée à partir d'un écart de position de mesure (d) et d'un temps de transit de matière déterminé (Delta-t) entre les positions de mesure (MP1, MP2).

15. Dispositif de mesure térahertz (1) destiné à la détection d'un flux de matière (10) au moyen d'une mesure de temps de transit, ledit dispositif présentant :
au moins un miroir réflecteur (8, 9) pour réfléchir au moins partiellement un rayonnement THz,
un capteur THz (2) pour émettre un rayon émis THz (3) le long d'un axe optique (A) et recevoir un rayon de réflexion THz (4) réfléchi par l'au moins un miroir réflecteur (8, 9) le long de l'axe optique (A) et émission d'une amplitude de signal (Sa),
un dispositif de commande et d'évaluation (100) qui est conçu pour recevoir l'amplitude de signal (Sa) du capteur THz (2) et déterminer des caractéristiques matérielles d'un flux de matière (10) guidé entre le capteur THz (2) et le miroir réflecteur (8, 9) à partir d'une comparaison de plusieurs mesures et/ou d'un comportement temporel de l'amplitude de signal (Sa).

16. Dispositif de mesure THz (1) suivant la revendication 15, **caractérisé en ce qu'**il présente un dispositif de couplage et de découplage (6), p.ex. un miroir translucide (6, 6a), qui divise le rayon émis THz (3) en un premier rayon émis partiel THz (3-1) et un second rayon émis partiel THz (3-2) et pour le couplage des rayons partiels réfléchis sur l'axe optique commun (A) et
au moins un miroir de déviation (7, 7a) pour dévier au moins un des rayons partiels découplés sur une seconde position de mesure (MP1) de manière que les deux rayons partiels émis THz (3-1, 3-2) sont positionnés en différentes positions de mesure (MP1, MP2) au niveau du dispositif de guidage (5) et rétroréfléchis dans les positions de mesure respectivement par au moins un miroir réflecteur (8, 9).

17. Agencement constitué du dispositif de mesure THz (1) suivant une des revendications 15 ou 16 et du dispositif de guidage (5) par exemple un tube en matière artificielle destiné à guider un flux de matière (10-1, 10-2) avec des particules matérielles (11) dans un gaz, par exemple dans de l'air.

18. Procédé de fabrication d'un objet de production (24) en particulier d'un objet de production extrudé dans lequel au moins un matériau en particules matérielles (11), par exemple un granulé ou une poudre, est amené par un dispositif d'amenée (2) sous forme de flux de matière (10) à un dispositif de production (22), le flux de matière (10) étant détecté à l'aide d'un procédé suivant une des revendications 1 à 14 et/ou un dispositif de mesure THz (1) suivant une des revendications 15 à 16 et un débit de matière (MD) du flux de matière (10) est déterminé et en fonction du débit de matière (MD) déterminé, une capacité de transport du dispositif d'amenée (20) et/ou des réglages de production du dispositif de production (22) sont effectués pour le réglage de la fabrication de l'objet à produire.
